# EUROPEAN PATENT APPLICATION

(11) **EP 2 688 269 A1**
(43) Date of publication of application: **22.01.2014**
(21) Application number: 12177151.3
(22) Date of filing: 19.07.2012
(51) Int. Cl.: H04M 1/02

(54) **Flipping mechanism for mobile electronic device**

(71) Applicant: BlackBerry Limited, Waterloo, ON N2K 0A7 (CA)
(72) Inventor: Leung, Kwok Ching, Ontario N2L 3W8 (CA); Wun, Archer Chi Kwong, Onatario, L4W 0B5 (CA); Griffin, Jason Tyler, Ontario, N2L 3W8 (CA)
(74) Representative: Hibbert, Juliet Jane Grace

(57) **Abstract**

A mobile electronic device including a first auxiliary section, a main screen section having a display screen, a second auxiliary section having a user input device, and a back section having a microprocessor and a battery. In a first state, the mobile electronic device includes the first auxiliary section and the main screen section on a first side of the device, and the second auxiliary section and the back section on a second side of the device, the first side and the second side being disposed on opposite sides of the mobile electronic device. In a second state, the mobile electronic device includes the second auxiliary section and the main screen section on the first side, and the first auxiliary section and the back section on the second side.

## Description

### Field of the Invention

The present embodiments relate to a mobile electronic device achieving a larger display ratio as compared with the size of a device using a flipping mechanism.

### Discussion of the Background

Conventional handheld devices concealed the keypad of the handheld device using a sliding mechanism by which the keypad would slide in and out of the body of the device. Such devices increased the size of the device when the keypad was in the "out" position. In addition, when the keypad is in the out position, the overall balance of the device is changed, resulting in the device feeling top-heavy to the user during typing on the keypad.

### BRIEF DESCRIPTION OF SEVERAL VIEWS OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates a view of a mobile electronic device in a closed configuration according to the first embodiment;
Figure 2 illustrates a front view of the mobile electronic device in a closed configuration according to the first embodiment;
Figure 3 illustrates a sectional view of the mobile electronic device in a closed configuration according to the first embodiment;
Figure 4 illustrates a side view of the mobile electronic device in an open configuration according to the first embodiment;
Figure 5 illustrates another view of the mobile electronic device in an open configuration according to the first embodiment;
Figure 6 illustrates another view of the mobile electronic device in a closed configuration and in a second state according to the first embodiment;
Figure 7 illustrates a front view of the mobile electronic device in a closed configuration and in the second state according to the first embodiment;
Figure 8 illustrates a sectional view of the mobile electronic device in a closed configuration and in the second state according to the first embodiment;
Figure 9 illustrates another side view of the mobile electronic device in an open configuration according to the first embodiment;
Figure 10 illustrates another view of the mobile electronic device in an open configuration according to the first embodiment;
Figure 11 illustrates an exploded view of the mobile electronic device according to the first embodiment;
Figure 12 illustrates a view of a mobile electronic device in a closed configuration according to a second embodiment;
Figure 13 illustrates a front view of the mobile electronic device in the closed configuration according to the second embodiment;
Figure 14 illustrates a sectional view of the mobile electronic device in the closed configuration according to the second embodiment;
Figure 15 illustrates a side view of the mobile electronic device in an open configuration according to the second embodiment;
Figure 16 illustrates another view of the mobile electronic device in an open configuration according to the second embodiment;
Figure 17 illustrates another view of the mobile electronic device in a closed configuration and in a second state according to the second embodiment;
Figure 18 illustrates a front view of the mobile electronic device in the closed configuration and in the second state according to the second embodiment;
Figure 19 illustrates a sectional view of the mobile electronic device in the closed configuration and in the second state according to the second embodiment;
Figure 20 illustrates another side view of the mobile electronic device in an open configuration according to the second embodiment;
Figure 21 illustrates another view of the mobile electronic device in an open configuration according to the second embodiment;
Figure 22 illustrates an exploded view of the mobile electronic device according to the second embodiment;
Figure 23 illustrates a view of a mobile electronic device in a closed configuration according to a third embodiment;
Figure 24 illustrates a front view of the mobile electronic device in the closed configuration according to the third embodiment;
Figure 25 illustrates a sectional view of the mobile electronic device in the closed configuration according to the third embodiment;
Figure 26 illustrates a side view of the mobile electronic device in an open configuration according to the third embodiment;
Figure 27 illustrates another view of the mobile electronic device in an open configuration according to the third embodiment;
Figure 28 illustrates another view of the mobile electronic device in a closed configuration and in a second state according to the third embodiment;
Figure 29 illustrates a front view of the mobile electronic device in the closed configuration and in the second state according to the third embodiment;
Figure 30 illustrates a sectional view of the mobile electronic device in the closed configuration and in the second state according to the third embodiment;
Figure 31 illustrates another side view of the mobile electronic device in an open configuration according to the third embodiment;
Figure 32 illustrates another view of the mobile electronic device in an open configuration according to the third embodiment; and
Figure 33 illustrates an exploded view of the mobile electronic device according to the third embodiment.

### DETAILED DESCRIPTION OF THE EMBODIMENTS

### First Embodiment

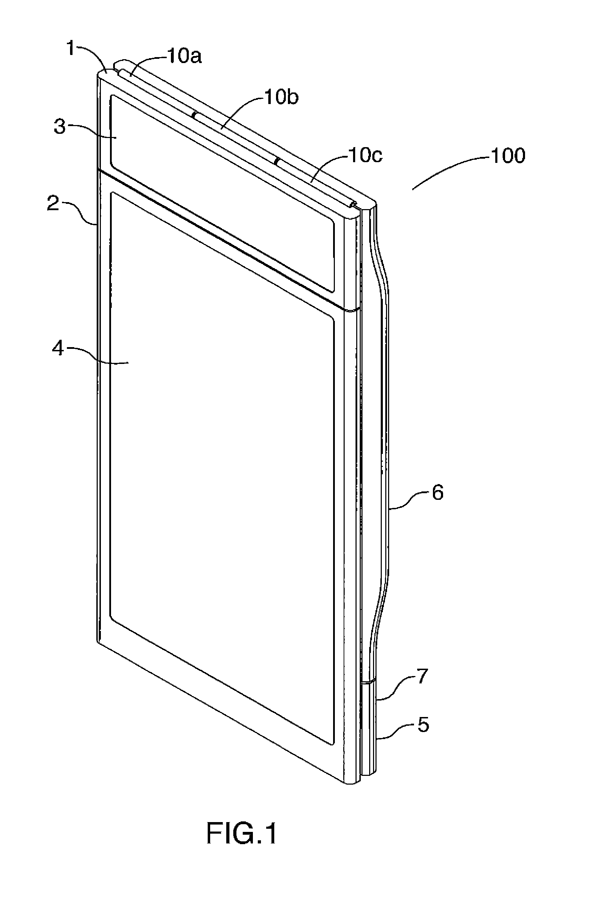

Referring now to the drawings wherein like reference numbers designate identical or corresponding parts throughout the several views and more particularly to Figure 1 thereof, there is illustrated a mobile electronic device 100 having four sections, a first auxiliary section 1, a main screen section 2, a second auxiliary section 5, and a back section 6.

The first auxiliary section 1 includes a display screen 3. The display screen 3 may include a touch screen or other similar input device. The first auxiliary section 1 is connected at one end to the main screen section 2 and at an opposite end to the back section 6. Figure 1 illustrates, for example, hinges 10a-10c and a pin that connect the first auxiliary section 1 to the back section 6. The hinges may be rigid or flexible and may be made of metal, plastic, rubber, or other suitable material, for example. The first auxiliary section 1 may also be connected to the main screen section 2 and the back section 6 by way of other suitable connecting methods. For instance, the first auxiliary section 1 may be connected to the main screen section 2 and the back section 6 by way of flexible material, such as rubber, which bends as the sections move. In one embodiment, the flexible material may be formed with a bend that flattens as the sections move.

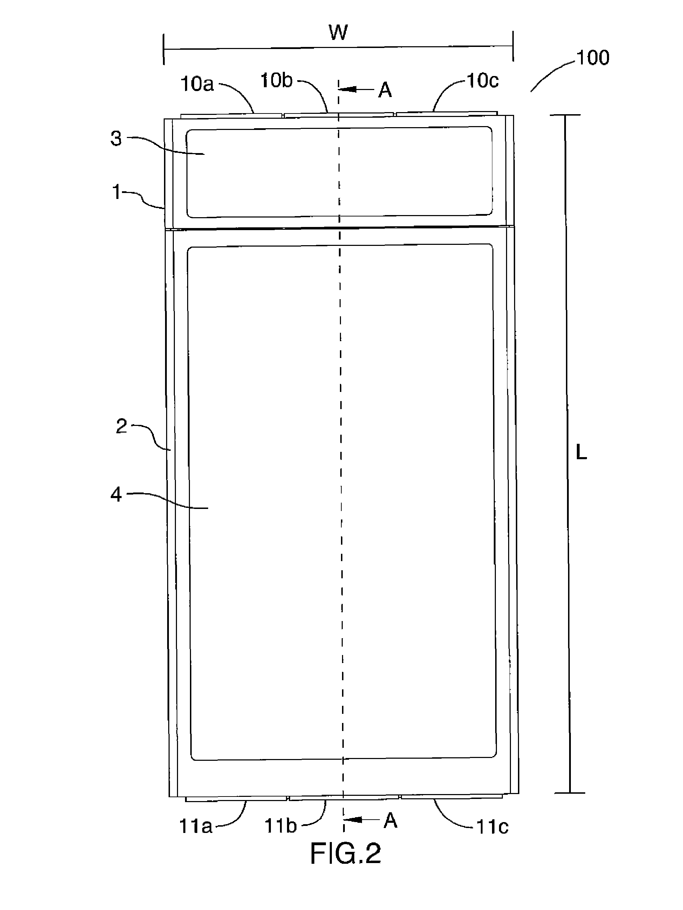

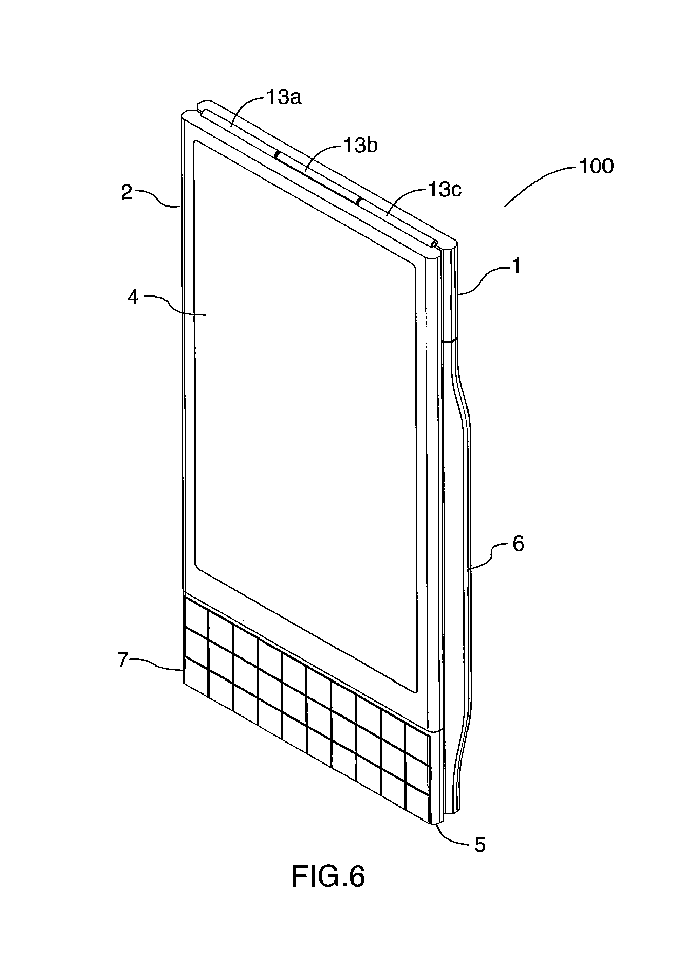

The second auxiliary section 5 includes a keyboard 7 (Figure 6). The keyboard 7, in one embodiment, may be a tactile keyboard. The second auxiliary section 5 could also include an additional display screen or touch screen that may or may not function as a keyboard. In addition, the second auxiliary section 5 could include, in place of or in addition to the keyboard or display screen, a touchless input device implemented via image sensors or other light or movement sensors. The second auxiliary section 5 is connected at one end to the main screen section 2 and at an opposite end to the back section 6 by way of, for example, hinges similar to hinges 10a-10c and a pin (Figure 2). The second auxiliary section 5 may also be connected to the main screen section 2 and the back section 6 by way of other suitable connecting mechanisms, such as the mechanisms described above with respect to the first auxiliary section 1.

The back section 6, in one embodiment, includes a battery in addition to circuits associated with operation of the mobile electronic device 100, such as a microprocessor and memory. The microprocessor is used to implement functions executed on the mobile electronic device 100 and to implement the display and execution of the operating system of the mobile electronic device 100 on the display screen 3 and a display screen 4. The memory is used to store programs and functions that are executed by the microprocessor.

The back section 6 may be of differing thickness such that one or more portions of the back section 6 is a first thickness, and one or more portions of the back section 6 is a second thickness, wherein the first thickness is greater than the second thickness. Such variations in thickness may render the device 100 more comfortable during use, when the device 100 is gripped by a user's hand(s). Further, such variations in thickness may provide a gripping surface for manipulating the device 100 between the open and closed positions.

In one embodiment, the main screen section 2 includes the display screen 4. The display screen 4 may be a touch screen or other suitable device that displays information and receives input from a user.

The display screen 4 may display information independent of, or in concert with, the information displayed on display screen 3. For example, the display screen 3 may be an extension of the display screen 4 such that the screen appears to be larger in size. Alternatively, the display screen 3 may display information in concert with the display screen 4, but without making the screen appear to be a larger size (e.g. a window open on the display screen 4 would not extend into the display screen 3, while a window would extend into the display screen 3 in the alternate embodiment). In addition, in one embodiment, there is a border around each of the display screen 4 and the display screen 3. Alternatively, in another embodiment, the display screen 4 and the display screen 3 are substantially flush and may include or may not include a protective layer that is disposed between the display screen 3 and the display screen 4.

The display screen 3 may also display content and receive input from a user independent from, or related to, the content displayed on the display screen 4. For example, the display screen 3 may display advertisements, location-based information, launch icons, or shortcut icons. The display screen 3 could include tabs allowing the user to switch between windows on the display screen 4.

Figure 2 illustrates a front facing view of the mobile electronic device 100. From the front facing view only the first auxiliary section 1 and the main screen section 2 are shown. Illustrated in Figure 2 are the hinges 10a-10c that connect the first auxiliary section 1 to the back section 6. Also illustrated in Figure 2 are hinges 11a-11c that connect the main screen section 2 to the back section 6.

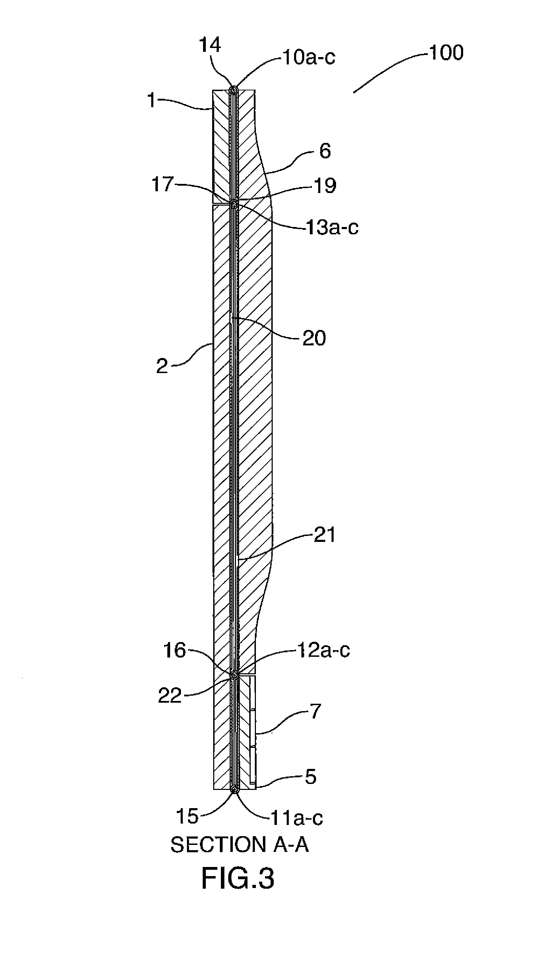

Figure 3 illustrates a sectional view along the line A-A shown in Figure 2. In Figure 3, each of the first auxiliary section 1, the main screen section 2, the second auxiliary section 5, and the back section 6 are shown. Also shown are hinges 10a-c connecting the first auxiliary section 1 to the back section 6 and pin 14, which is disposed there-through. Hinges 13a-c with pin 17 there-through connect the first auxiliary section 1 to the main screen section 2. Hinges 12a-c and pin 16 there-through connect the back section 6 to the second auxiliary section 5 having the keyboard 7 thereon. Hinges 11a-c and pin 15 there-through connect the second auxiliary section 5 to the main screen section 2.

To provide space for hinges 10a-c a recess 20 is defined in a back side of the main screen section 2 (on the side that is opposite of the display screen 4). To provide space for hinges 11a-c, a recess 21 is defined in a back side of the back section 6 (on the side that is closest to the display screen 4).

In the state shown in Figure 3, hinges 12a-c are resting in recess 22. The recess 22 provides space for hinges 12a-c and is defined in the back side of main screen section 2. Hinges 13a-c are resting in recess 19, which provides space for hinges 13a-c and is defined in the back side of back section 6.

The recesses 19-22 enable a front face or first side of the device 100, including the main screen section 2 and either the first auxiliary section 1 or the second auxiliary section 5, to be positioned flat against a back face or second side of the device 100, including the back section 6 and either the first auxiliary section 1 or the second auxiliary section 5.

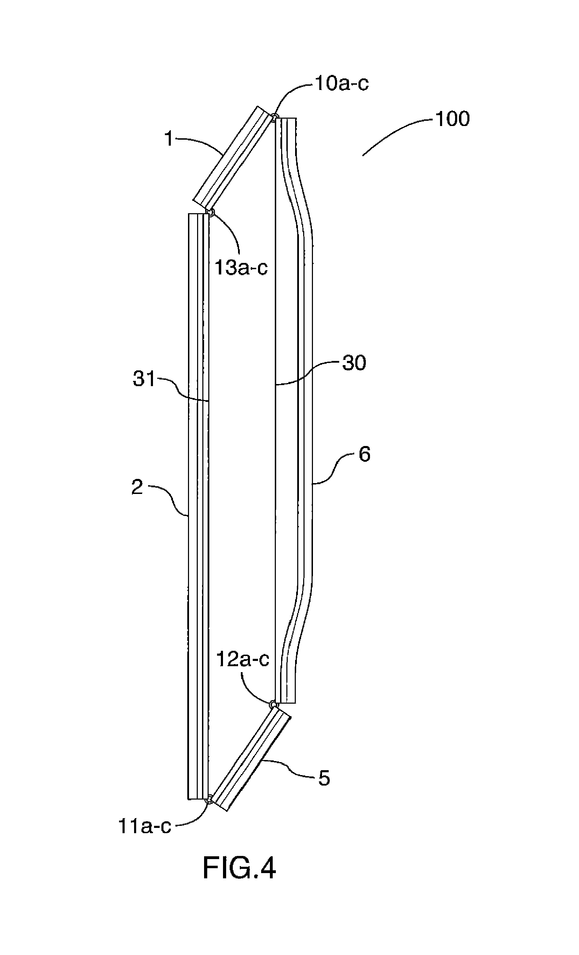

Figure 4 illustrates a view of the mobile electronic device 100 in an open position as the device 100 transitions to the second state. In the open position, the mobile electronic device 100 is in the process of switching from a first state to a second state. This switching is an example of the flipping mechanism. The first state is a state in which the first auxiliary section 1 and the main screen section 2 are on the first side of the device 100, and the back section 6 and the second auxiliary section 5 are on the second side of the device 100. The first and second sides are on opposite sides of the mobile electronic device 100. The second state is a state in which the second auxiliary section 5 and the main screen section 2 are on the first side of the device 100, and the back section 6 and the first auxiliary section 1 are on the second side of the device 100.

In the closed position, the device 100 has the same size footprint (length and width shown in Figure 2) in the first state and in the second state. Maintaining the same footprint in both the open and closed positions enables the device size to remain the same while providing large display/input areas, and prevents the device 100 from becoming too unwieldy.

When the first auxiliary section 1 or the second auxiliary section 5 is on the second side, the display screen 3 or the keyboard or input device 7, respectively, may be disabled. Alternatively, the display screen 3 or the keyboard 7 may be fully or partially enabled for input. In addition, the display screen 3 may be disabled for input, but enabled for display only. When the keyboard 7 is on the second side, a touch screen keyboard may be displayed on the display screen 4 or on the display screen 3. When the touch screen keyboard is displayed on the display screen 3 the image on the display screen 4 may be rotated. The display screen 4 and the display screen 3 may also be rotated independently or as a single unit in response to rotation of the device 100 by a user.

To keep the first side of the device 100 attached to the second side of the device 100 when in the closed position, there is utilized a clasping mechanism 30/31. The clasping mechanism can be implemented using a magnet 30 or 31 and a metal plate 30 or 31. Alternatively, the clasping mechanism can be implemented using two magnets 30 and 31. The mechanism can also be implemented with three magnets, with two of the magnets being positioned on either the main screen section 2 or the back section 6. Alternatively, the clasping mechanism 30/31 can be implemented with two metal sections and one magnet or two magnets and one metal section, where the two metal sections or two magnets are positioned on either the main screen section 2 or the back section 6.

The clasping mechanism 30/31 can also be implemented with a mechanical clasp having a hook or clasp made of metal or plastic. The clasping mechanism 30/31 can also be implemented with a pin or a pin having a ball on the end.

The clasping mechanism 30/31 can be released by force of the user or by a mechanical release. For example, when the device 100 is in the closed position, the user is able release the clasping mechanism 30/31 by pulling the main screen section 2 apart from the back section 6. Alternatively, when the device 100 is in the closed position, the user is able release the clasping mechanism 30/31 by activating a mechanical release, such as a button, which will disengage the clasping mechanism 30/31. Once the clasping mechanism 30/31 is disengaged, the device 100 is in the open position. The user may return the device 100 to the closed position by bringing the main screen section 2 and the back section 6 together. The process of returning the device 100 to the closed position also allows the user to select between the first and second states of the device 100.

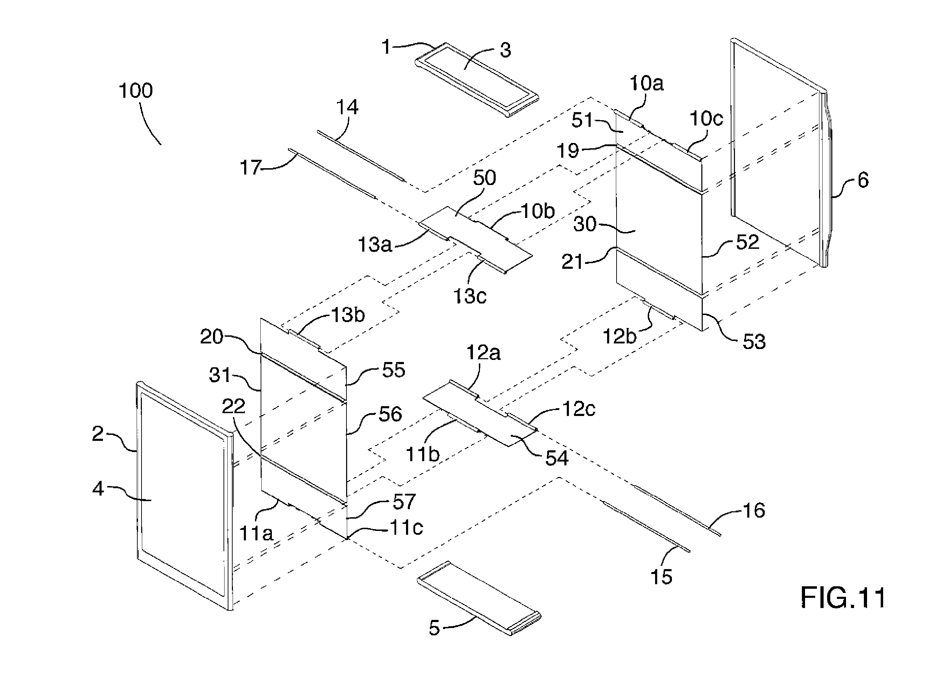

In an alternate embodiment, the first auxiliary section 1 may split into two portions allowing the display screen 3 to partially separate from a core portion (e.g. element 50 in Figure 11 discussed below) of the first auxiliary section 1 and extend above the main screen section 2, such that, when in the second state, the first side would include the display screen 3, the display screen 4, and the keyboard 7 (not shown). Thus, the display screen 3 is able to flex/separate such that the display screen 3 is on the same side as the main display screen 4 and the keyboard 7, when the device 100 is in the second state (since in the first state, the keyboard is on the second/back side of the device 100). The display screen 3 could be connected to the core portion of the first auxiliary section 1 by a hinge, etc. The display screen 3 could be connected to the core portion of the first auxiliary section 1 by a clasp or a magnetic holding device. A similar alternate embodiment could be implemented for the keyboard 7 and the second auxiliary section 5.

In an additional alternative embodiment, the main screen section 2 and the back section 6 could be directly connected to each other, without the first auxiliary section 1 connected therebetween. In this embodiment the main screen section 2 and the back section 6 form a top portion. Moreover, in this embodiment, the first auxiliary section 1 and second auxiliary section 5 could be disposed back to back such that the first auxiliary section 1 and the second auxiliary section 5 are directly connected without the back section 6 therebetween. The first auxiliary section 1 and the second auxiliary section 5 would form a bottom portion. The bottom portion could rotate with respect to the top portion so that the keyboard 7 is below the display screen 4 in one state, and the display screen 3 is below the display screen 4 in another state.

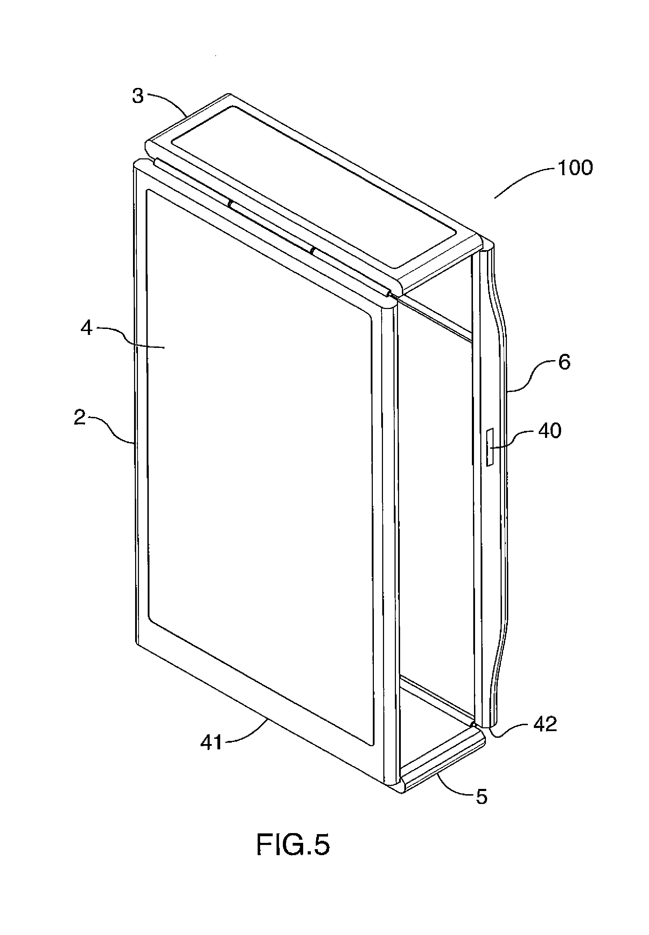

Figure 5 illustrates another view of the mobile electronic device 100 in the open position as the device 100 continues to transition to the second state.

In the open position, the mobile electronic device 100 may rest on its side to maintain an upright position for viewing purposes. In the open position, the display screen 3 or the keyboard 7 may be disabled or may be enabled.

The power or input connectors for the mobile electronic device 100 may be on a side 40 of the device, on a bottom 41 of the main screen section 2 or a bottom 42 of the back section 6.

Figure 6 illustrates another view of the mobile electronic device 100. In this view, the display screen 4 and the keyboard 7 are presented to the user. In this view, the main screen section 2 and the second auxiliary section 5 are on the first side of the device 100, corresponding to the second state in the closed position.

In this second state, the hinges 13a-13c connecting the main screen section 2 to the first auxiliary section 1 are shown. Also shown is the keyboard 7 of the second auxiliary section 5 and the back section 6.

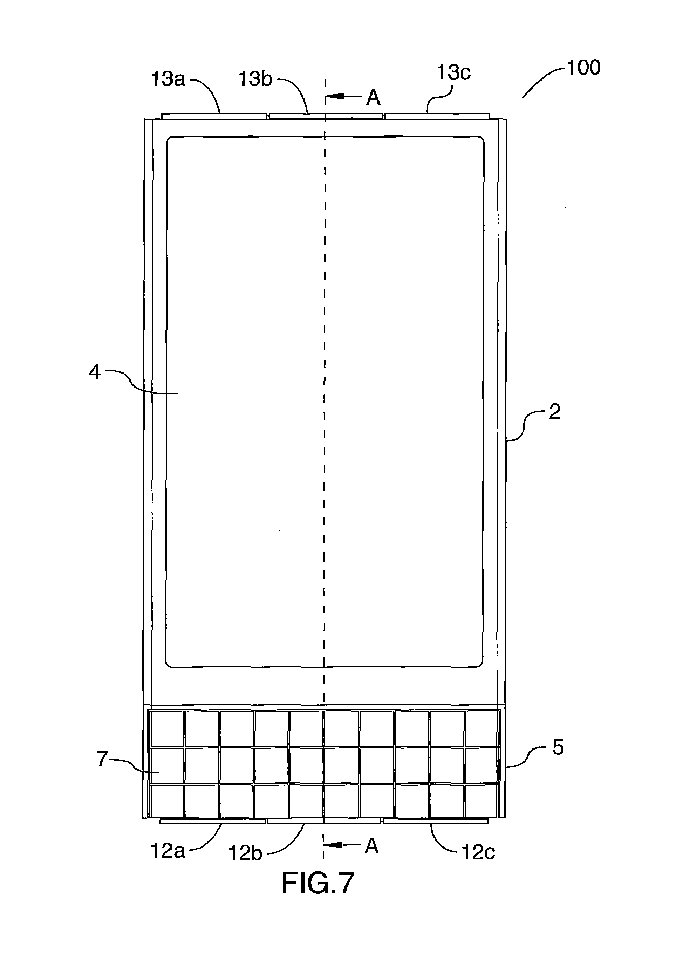

Figure 7 illustrates a front view of the mobile electronic device 100 in the second state and in the closed position. In this view, the hinges 13a-13c, the main screen section 2 having therein the display screen 4, and the second auxiliary section 5 having therein the keyboard 7 are illustrated. Also illustrated in Figure 7 are the hinges 12a-12c, which connect the second auxiliary section 5 to the back section 6.

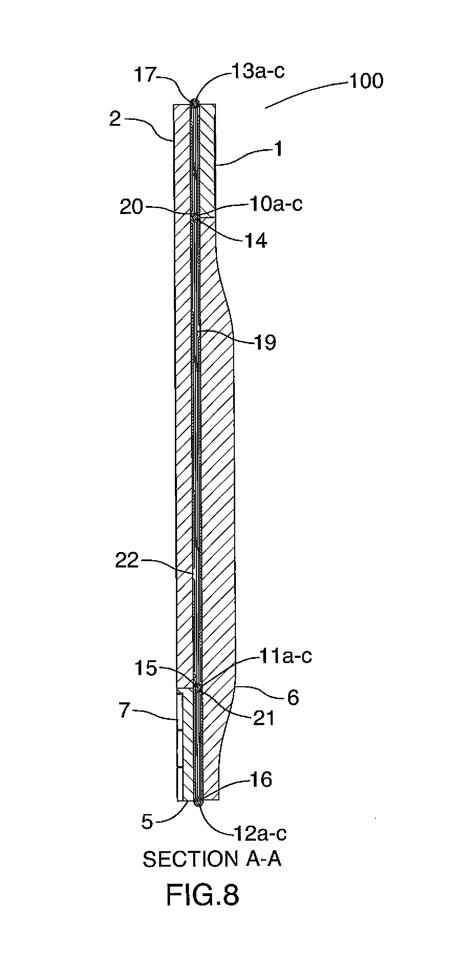

Figure 8 illustrates a sectional view along line A-A shown in Figure 7. In Figure 8, each of the first auxiliary section 1, the main screen section 2, the second auxiliary section 5 and the back section 6 are shown. Also shown are hinges 13a-c with pin 17 there-through connecting the first auxiliary section 1 to the main screen section 2. Hinges 10a-c and pin 14, which is disposed there-through, connect the first auxiliary section 1 to the back section 6. Hinges 12a-c and pin 16 there-through connect the back section 6 to the second auxiliary section 5 having the keyboard 7 thereon. Hinges 11a-c and pin 15 there-through connect the second auxiliary section 5 to the main screen section 2.

Also shown in Figure 8 are recesses 19, 20, 21, and 22, which provide space for hinges 10a-13c. In the view shown in Figure 8, recesses 20 and 21 are occupied by hinges 10a-c and 11a-c, respectively.

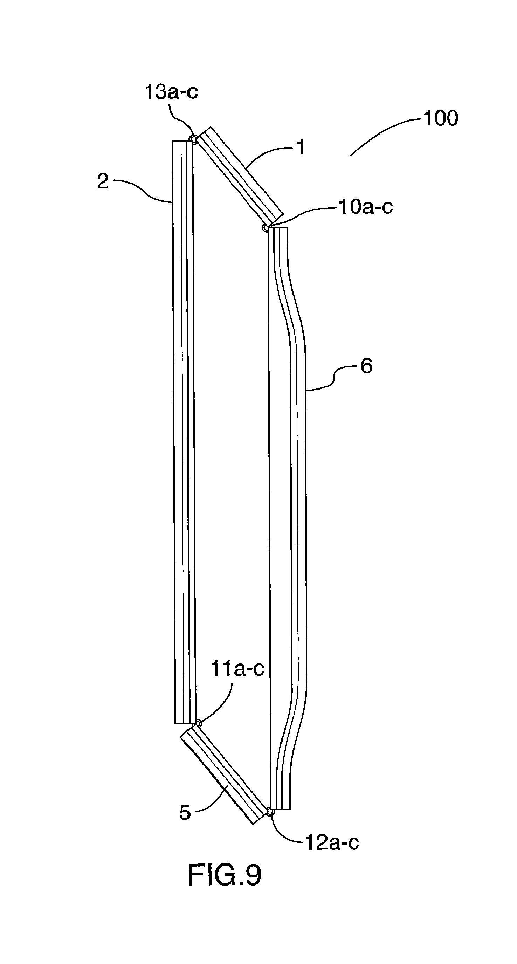

Figure 9 illustrates a side view of the mobile electronic device 100 in the open position as the device 100 transitions to the closed position and back to the first state of the device 100. In this view, each of the first auxiliary section 1, the main screen section 2, the second auxiliary section 5, and the back section 6 are shown. Also illustrated are the hinges 10a-c, 11a-c, 12a-c, and 13a-c.

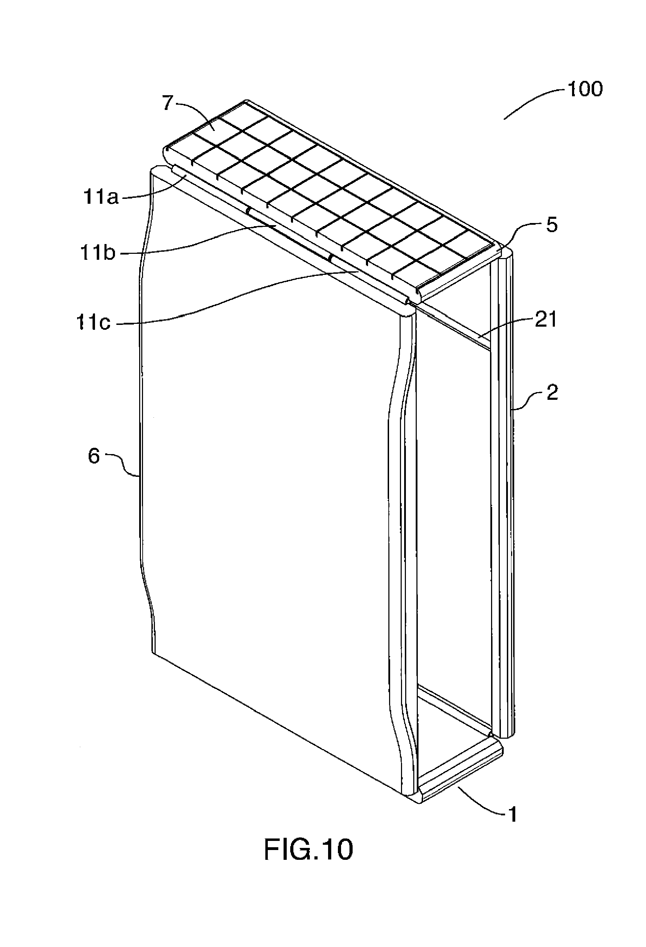

Figure 10 illustrates another view of the mobile electronic device 100 in the open position as the device 100 continues to transition back to the first state. In this view, each of the first auxiliary section 1, the main screen section 2, the second auxiliary section 5, and the back section 6 are shown. Also shown is the keyboard 7 on the second auxiliary section 5 and the recess 21, which provides a space for hinges 11a-11c.

Figure 11 illustrates an exploded view of the mobile electronic device 100.

In this view, each of the first auxiliary section 1, the main screen section 2, the second auxiliary section 5, and the back section 6 are shown.

Also illustrated are each of the hinges 10a-c, 11a-c, 12a-c, and 13a-c and pins 14-17. This view also illustrates that the hinges 10a-c, 11a-c, and 12a-c may, in one embodiment, be composed of different pieces 50, 51, 53, 54, 55 and 57. The pieces 50, 51, 53, 54, 55 and 57 may be made of metal or plastic or some other suitable material.

As is illustrated in Figure 11, the hinges 10a-10c can be composed of hinges attached or included in different pieces. Hinges 10a and 10c are connected to or included (i.e., integral with) in piece 51. Hinge 10b is connected to or included in piece 50. When pin 14 is inserted into hinges 10a-10c, pieces 50 and 51 are connected.

Hinges 11a-11c can also be composed of hinges attached or included in different pieces. Hinges 11a and 11c are connected to or included in piece 57. Hinge 11b is connected to or included in piece 54. When pin 15 is inserted into hinges 11a-11c, pieces 57 and 54 are connected.

Hinges 12a-12c can be composed of hinges attached or included in different pieces. Hinges 12a and 12c are connected to or included in piece 54. Hinge 12b is connected to or included in piece 53. When pin 16 is inserted into hinges 12a-12c, pieces 54 and 53 are connected.

Hinges 13a-13c can be composed of hinges attached or included in different pieces. Hinges 13a and 13c are connected to or included in piece 50. Hinge 13b is connected to or included in piece 55. When pin 17 is inserted into hinges 13a-13c, pieces 55 and 50 are connected.

Thus, as is illustrated in Figure 11, pieces 50 and 54 include hinges from different hinge sets.

Pieces 55, 56, and 57 are attached to the main screen section 2. Piece 54 is attached to second auxiliary section 5. Pieces 51, 52, and 53 are attached to back section 6. Piece 50 is attached to first auxiliary section 1. Although other manners of attachment are possible, the pieces 50-57 can be connected to their respective sections 1, 2, 5, 6 by means of adhesives, welding, tab/groove connections, and the like.

Also illustrated in Figure 11 are recesses 19, 20, 21, and 22. Recesses 19 and 21 are illustrated as spaces between pieces 51 and 52 and pieces 52 and 53, respectively. Recesses 20 and 22 are illustrated as spaces between pieces 55 and 56 and pieces 56 and 57, respectively.

In an alternative embodiment, the recesses 19 and 21 and recesses 20 and 22 could respectively be defined in an integral piece of material, rather than being defined as spaces/gaps between the pieces. In this alternative embodiment, pieces 55-57 and 51-53 are each integral pieces (not shown) having recesses defined therein.

In addition, in one embodiment, pieces 52 and 56 may include the clasping mechanism 30/31 which retain the main screen section 2 and back section 6 to each other.

The electrical connections between the first auxiliary section 1, the main screen section 2, the second auxiliary section 5, and the back section 6 are implemented with flexible wiring which, in one embodiment, passes over the hinge elements 10b, 11b, 12b, and 13b. The wiring can be protected by a cover layer which is also included on elements 10a-13a and elements 10c-13c.

### Second Embodiment

The second embodiment will now be described with reference to the above-described first embodiment. The reference numerals that are the same as those in the first embodiment will remain consistent with the first embodiment unless there is a special necessity. In the second embodiment, the first auxiliary section 1 of a mobile electronic device 200 includes a speaker/receiver 104, a camera 106, and an opening 105, which can include an LED which functions as a flash. Alternatively, opening 105 can include a proximity or light sensor, or the LED can be included in addition to the sensor.

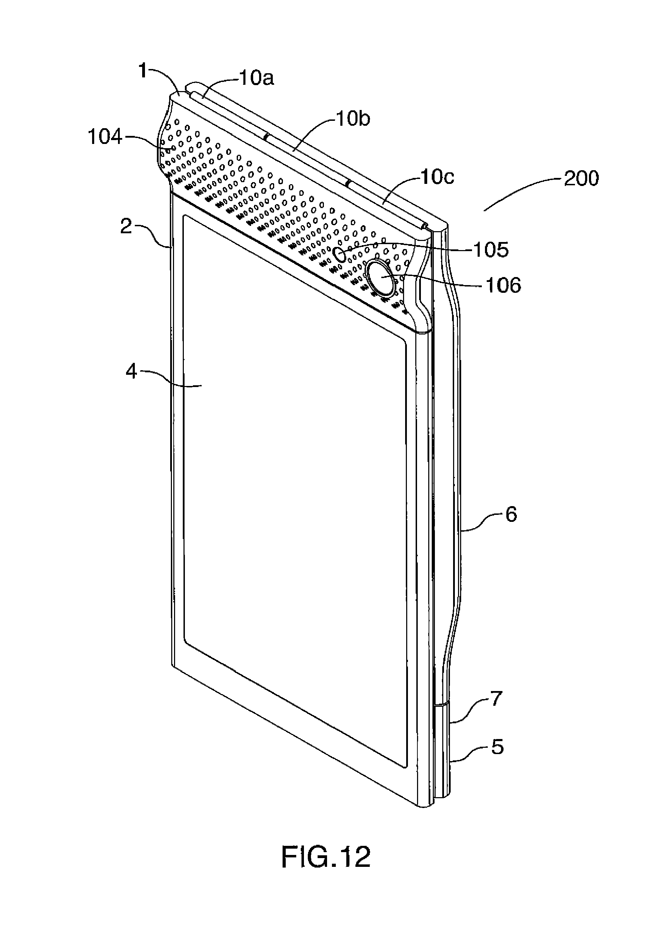

Figure 12 illustrates the mobile electronic device 200 having four sections, the first auxiliary section 1, the main screen section 2, the second auxiliary section 5, and the back section 6.

The first auxiliary section 1 includes the speaker/receiver 104, the camera 106, and the opening 105. The speaker/receiver 104 functions to output and input audio to and from the device. The camera 106 may be a high quality camera which functions for video conferencing and for capturing still photographs or videos. The opening 105 may include an LED flash, a proximity sensor, a light sensor, or some combination of each.

The first auxiliary section 1 is connected at one end to the main screen section 2 and at an opposite end to the back section 6. Figure 12 illustrates, for example, hinges 10a-10c and a corresponding pin that connect the first auxiliary section 1 to the back section 6. The hinges may be rigid or flexible and may be made of metal, plastic, rubber, or other suitable material, for example. The first auxiliary section 1 may also be connected to the main screen section 2 and the back section 6 by way of other suitable connecting methods. For instance, the first auxiliary section 1 may be connected to the main screen section 2 and the back section 6 by way of flexible material such as rubber that bends as the sections move. In one embodiment, the flexible material may be formed with a bend that flattens as the sections move.

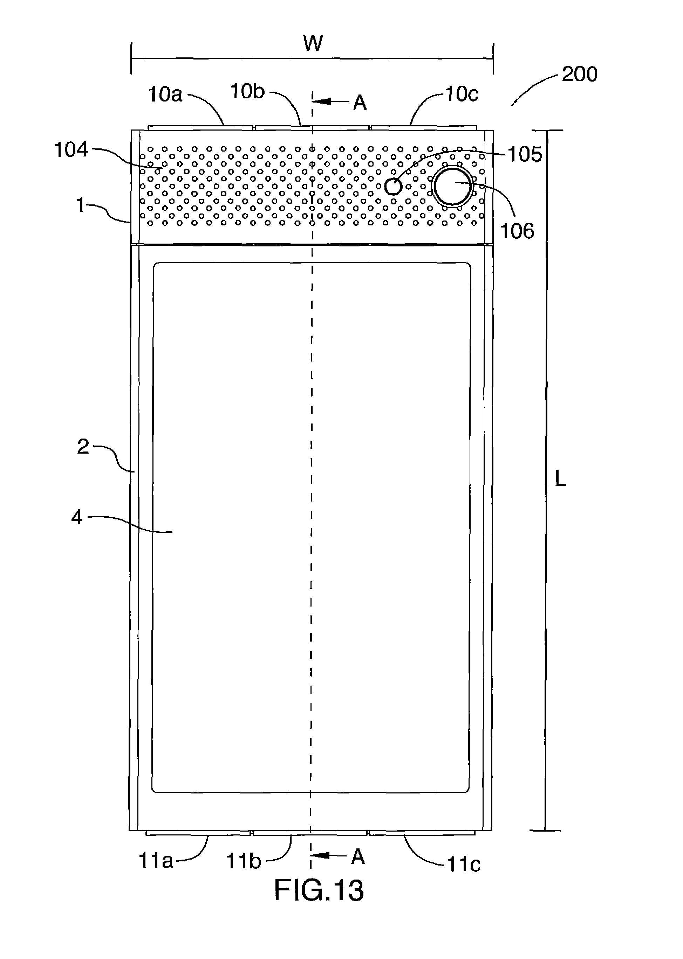

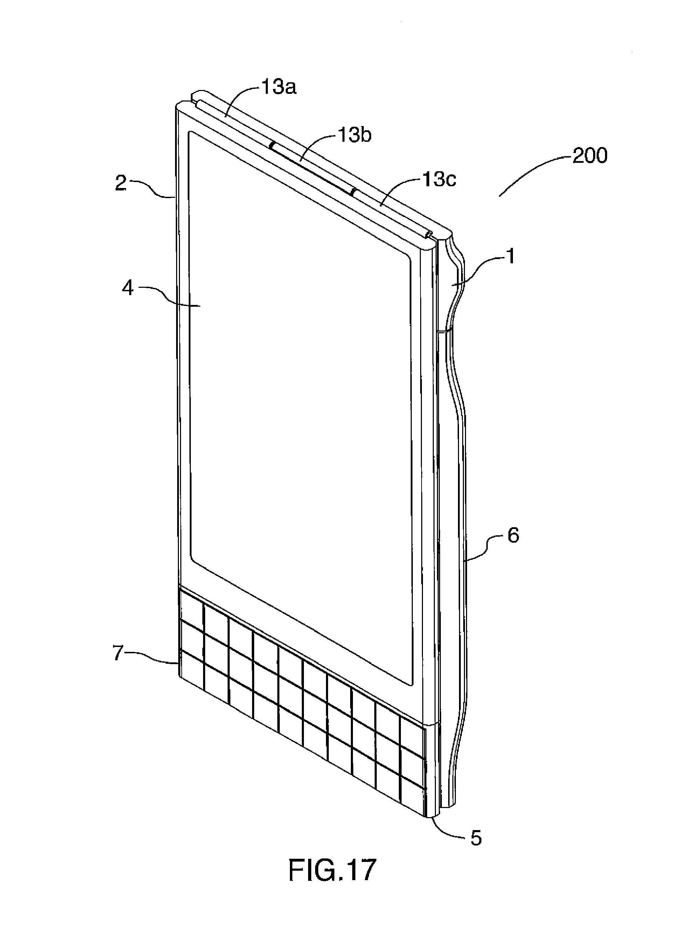

The second auxiliary section 5 includes the keyboard 7 (Figure 17). The keyboard 7, in one embodiment, may be a tactile keyboard. The second auxiliary section 5 could also include an additional display screen or touch screen that may or may not function as the keyboard. In addition, the second auxiliary section 5 could include, in place of or in addition to the keyboard or display screen, a touchless input device implemented via image sensors or other light or movement sensors. The second auxiliary section 5 is connected at one end to the main screen section 2 and at an opposite end to the back section 6 by way of, for example, a hinge similar to hinges 10a-10c and the pin (Figure 13). The second auxiliary section 5 may also be connected to the main screen section 2 and the back section 6 by way of other suitable connecting mechanisms, such as the mechanisms described above with respect to the first auxiliary section 1.

The back section 6, in one embodiment, includes the battery in addition to circuits associated with operation of the mobile electronic device 200, such as a microprocessor and memory. The microprocessor is used to implement functions executed on the mobile electronic device 200 and to implement the display and execution of the operating system of the mobile electronic device 200 on the display screen 4. The memory is used to store programs and functions that are executed by the microprocessor.

The back section 6 may be of differing thickness, such that one or more portions of the back section 6 is a first thickness and one or more portions of the back section 6 is a second thickness, wherein the first thickness is greater than the second thickness. As previously indicated with respect to device 100, such variations in thickness may render the device 200 more comfortable during use, when the device is gripped by a user's hand(s). Further, such variations in thickness may provide a gripping surface for manipulating the device 200 between the open and closed positions.

In one embodiment, the main screen section 2 includes the display screen 4. The display screen 4 may be a touch screen or other suitable device that displays information and receives input from a user.

Figure 13 illustrates a front facing view of the mobile electronic device 200. From the front facing view only the first auxiliary section 1 and the main screen section 2 are shown. The first auxiliary section 1 includes the speaker/receiver 104, the opening 105, and the camera 106.

Also illustrated in Figure 13 are the hinges 10a-10c that connect the first auxiliary section 1 to the back section 6. Also illustrated in Figure 13 are the hinges 11a-11c that connect the main screen section 2 to the back section 6.

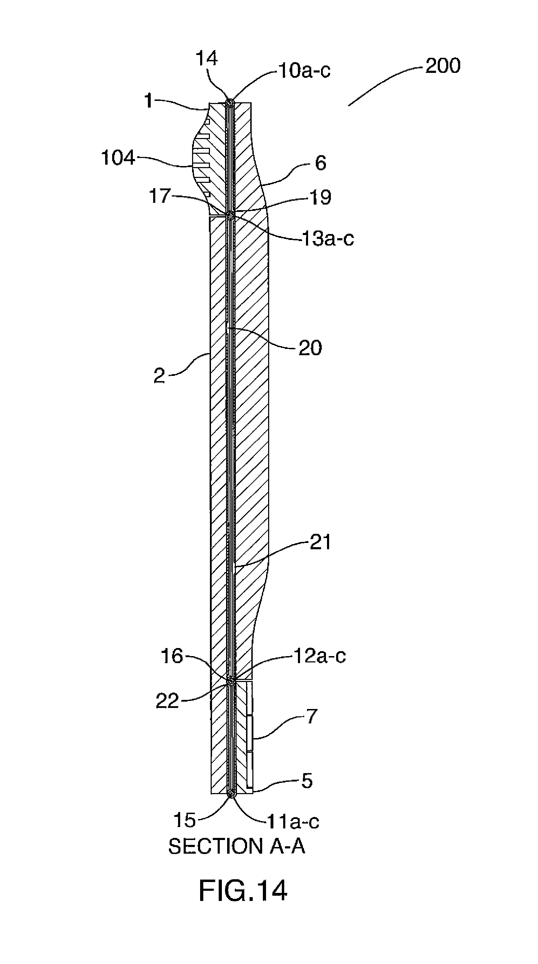

Figure 14 illustrates a sectional view along line A-A shown in Figure 13. In Figure 14, each of the first auxiliary section 1, the main screen section 2, the second auxiliary section 5, and the back section 6 are shown. Also shown are hinges 10a-c connecting the first auxiliary section 1 to the back section 6 and pin 14 which is disposed there-through. Hinges 13a-c with pin 17 there-through connect the first auxiliary section 1 to the main screen section 2. Hinges 12a-c and pin 16 there-through connect the back section 6 to the second auxiliary section 5 having the keyboard 7 thereon. Hinges 11a-c and pin 15 there-through connect the second auxiliary section 5 to the main screen section 2.

To provide space for hinges 10a-c a recess 20 is defined in a back side of the main screen section 2 (on the side that is opposite of the display screen 4). To provide space for hinges 11a-c, a recess 21 is defined in a back side of the back section 6 (on the side that is closest to the display screen 4).

In the state shown in Figure 14, hinges 12a-c are resting in recess 22. The recess 22 provides space for hinges 12a-c and is defined in the back side of main screen section 2. Hinges 13a-c are resting in recess 19, which provides space for hinges 13a-c and is defined in the back side of back section 6.

The recesses 19-22 enable a front face or first side of the device 200, including the main screen section 2 and either the first auxiliary section 1 or the second auxiliary section 5, to be positioned flat against a back face or second side of the device 200, including the back section 6 and either the first auxiliary section 1 or the second auxiliary section 5.

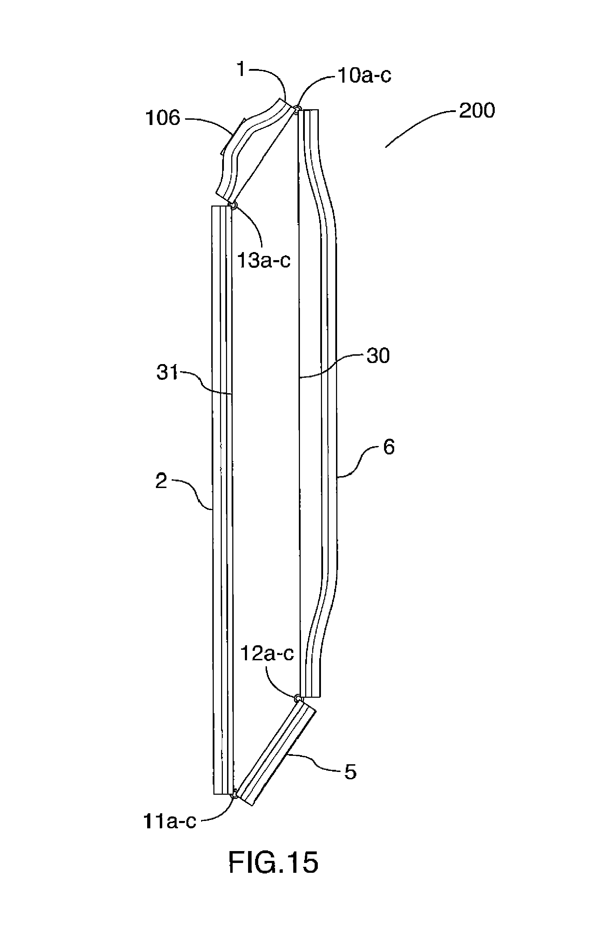

Figure 15 illustrates a view of the mobile electronic device 200 in an open position as the device 200 transitions to a second state. In the open position, the mobile electronic device 200 is in the process of switching from a first state to the second state. This switching is an example of the flipping mechanism. The first state is a state in which the first auxiliary section 1 and the main screen section 2 are on the first side of the device 200, and the back section 6 and the second auxiliary section 5 are on the second side of the device 200. The first and second sides are on opposite sides of the mobile electronic device 200. The second state is a state in which the second auxiliary section 5 and the main screen section 2 are on the first side of the device 200, and the back section 6 and the first auxiliary section 1 are on the second side of the device 200.

In the closed position, the device 200 has the same size footprint (length and width shown in Figure 13) in the first state and in the second state. As previously described, maintaining the same footprint in both the open and closed positions enables the device size to remain the same while providing large display/input areas, and prevents the device 200 from becoming too unwieldy.

When the second auxiliary section 5 is on the second side, the keyboard or input device 7, respectively, may be disabled. Alternatively, the keyboard 7 may be fully or partially enabled for input. When the keyboard 7 is on the second side, a touch screen keyboard may be displayed on the display screen 4.

When the second auxiliary section 1 is on the second side, the camera 106 is still enabled for video or still picture capture.

To keep the first side of the device 200 attached to the second side of the device 200 when in the closed position, there is utilized a clasping mechanism 30/31. The clasping mechanism can be implemented using a magnet 30 or 31 and a metal plate 30 or 31. Alternatively, the clasping mechanism can be implemented using two magnets 30 and 31. The mechanism can also be implemented with three magnets, with two of the magnets being positioned on either the main screen section 2 or the back section 6. Alternatively, the clasping mechanism 30/31 can be implemented with two metal sections and one magnet or two magnets and one metal section, where the two metal sections or two magnets are positioned on either the main screen section 2 or the back section 6.

The clasping mechanism 30/31 can also be implemented with a mechanical clasp having a hook or clasp made of metal or plastic. The clasping mechanism 30/31 can also be implemented with a pin or a pin having a ball on the end.

The clasping mechanism 30/31 can be released by force of the user or by a mechanical release. For example, when the device 200 is in the closed position, the user is able release the clasping mechanism 30/31 by pulling the main screen section 2 apart from the back section 6. Alternatively, when the device 200 is in the closed position, the user is able release the clasping mechanism 30/31 by activating a mechanical release, such as a button, which will disengage the clasping mechanism 30/31. Once the clasping mechanism 30/31 is disengaged, the device 200 is in the open position. The user may return the device 200 to the closed position by bringing the main screen section 2 and the back section 6 together. The process of returning the device 200 to the closed position also allows the user to select between the first and second states of the device 200.

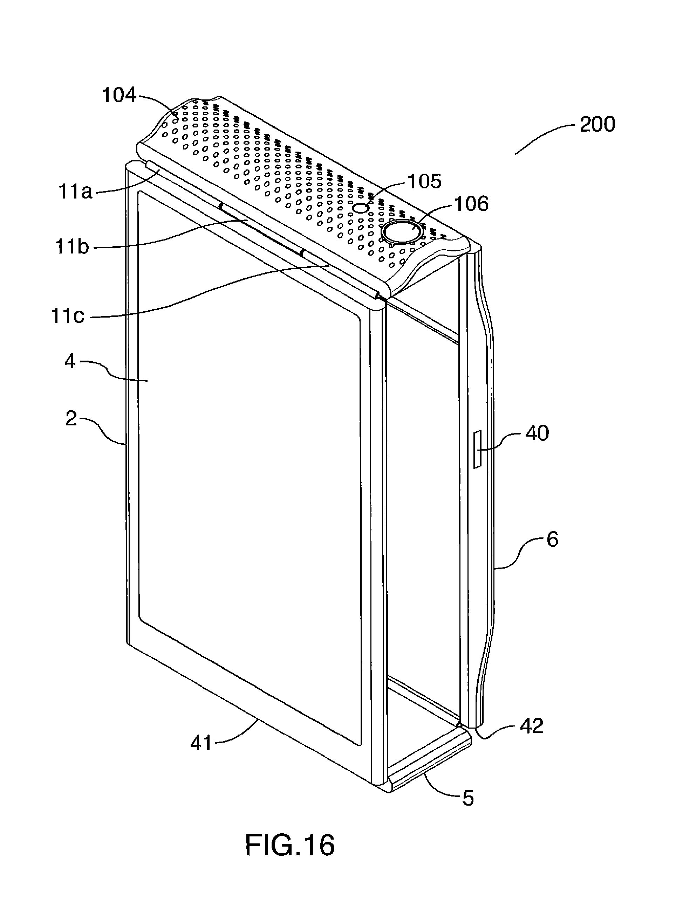

Figure 16 illustrates another view of the mobile electronic device 200 in the open position as the device 200 continues to transition to the second state.

In the open position, the mobile electronic device 200 may rest on its side to maintain an upright position for viewing purposes. In the open position, the camera 106 or the keyboard 7 may be disabled or may be enabled.

The power or input connectors for the mobile electronic device 200 may be on a side 40 of the device, on a bottom 41 of the main screen section 2 or a bottom 42 of the back section 6.

Figure 17 illustrates another view of the mobile electronic device 200. In this view, the display screen 4 and the keyboard 7 are presented to the user. In this view, the main screen section 2 and the second auxiliary section 5 are on the first side of the device 200, corresponding to the second state in the closed position.

In this second state, the hinges 13a-13c connecting the main screen section 2 to the first auxiliary section 1 are shown. Also shown is the keyboard 7 of the second auxiliary section 5 and the back section 6.

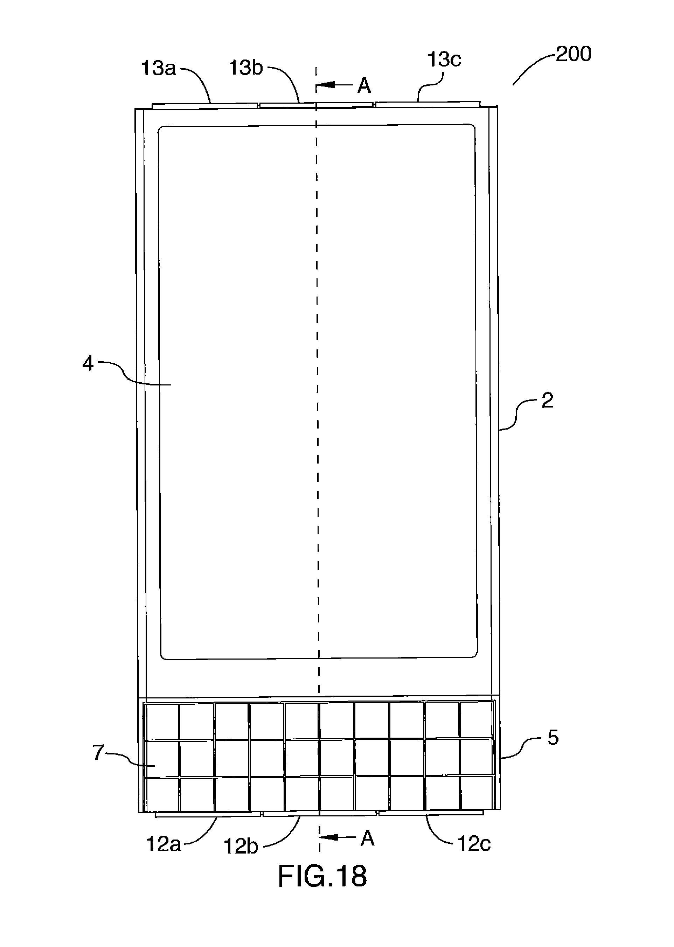

Figure 18 illustrates a front view of the mobile electronic device 200 in the second state and in the closed position. In this view, there is illustrated the hinges 13a-13c, the main screen section 2 having therein the display screen 4 and the second auxiliary section 5 having therein the keyboard 7. Also illustrated in Figure 18 are the hinges 12a-12c, which connect the second auxiliary section 5 to the back section 6.

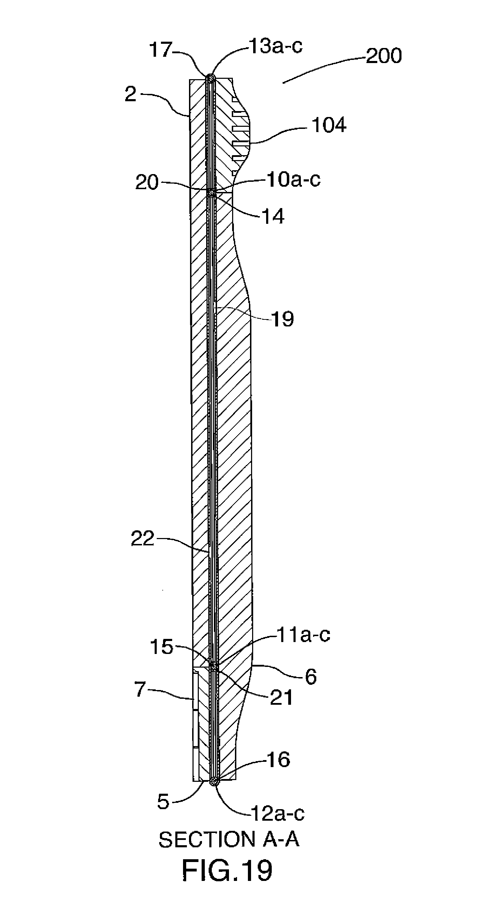

Figure 19 illustrates a sectional view along line A-A shown in Figure 18. In Figure 19, each of the first auxiliary section 1, the main screen section 2, the second auxiliary section 5, and the back section 6 are shown. Also shown are hinges 13a-c with pin 17 there-through connecting the first auxiliary section 1 to the main screen section 2. Hinges 10a-c and pin 14, which is disposed there-through, connect the first auxiliary section 1 to the back section 6. Hinges 12a-c and pin 16 there-through connect the back section 6 to the second auxiliary section 5 having the keyboard 7 thereon. Hinges 11a-c and pin 15 there-through connect the second auxiliary section 5 to the main screen section 2.

Also shown in Figure 19 are recesses 19, 20, 21, and 22, which provide space for hinges 10a-13c. In the view shown in Figure 19, recesses 20 and 21 are occupied by hinges 10a-c and 11a-c, respectively.

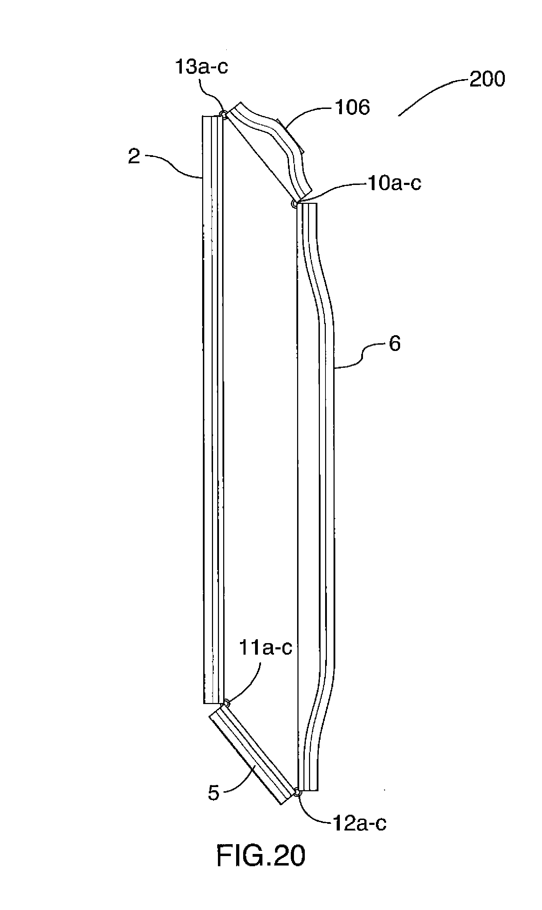

Figure 20 illustrates a side view of the mobile electronic device 200 in the open position as the device 200 transitions to the closed position and back to the first state of the device 200. In this view, each of the first auxiliary section 1, the main screen section 2, the second auxiliary section 5, and the back section 6 are shown. Also illustrated are the hinges 10a-c, 11a-c, 12a-c, and 13a-c.

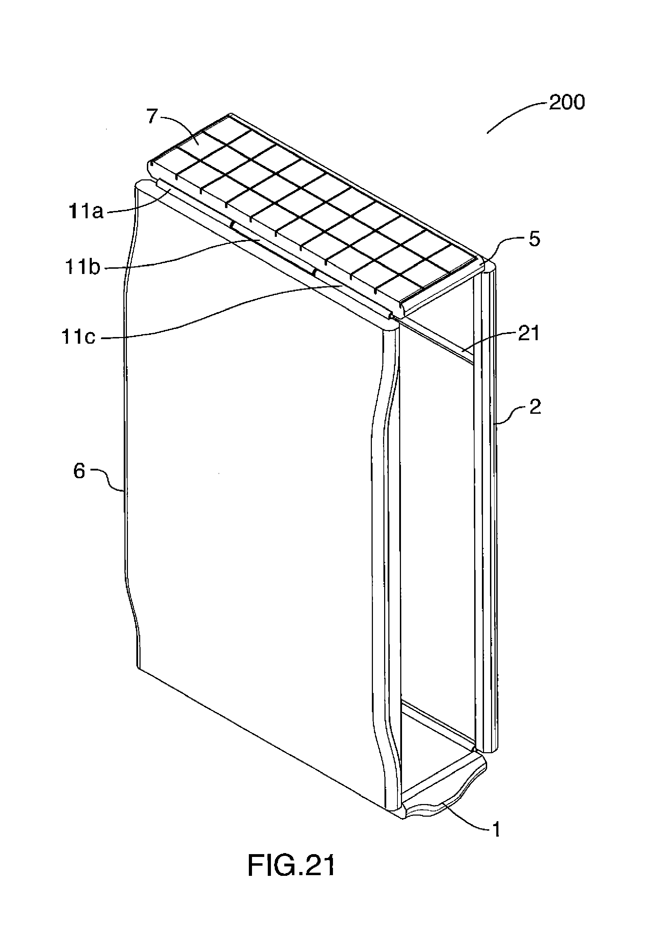

Figure 21 illustrates another view of the mobile electronic device 200 in the open position as the device 200 continues to transition back to the first state. In this view, each of the first auxiliary section 1, the main screen section 2, the second auxiliary section 5, and the back section 6 are shown. Also shown is the keyboard 7 on the second auxiliary section 5 and the recess 21, which provides a space for hinges 11a-11c.

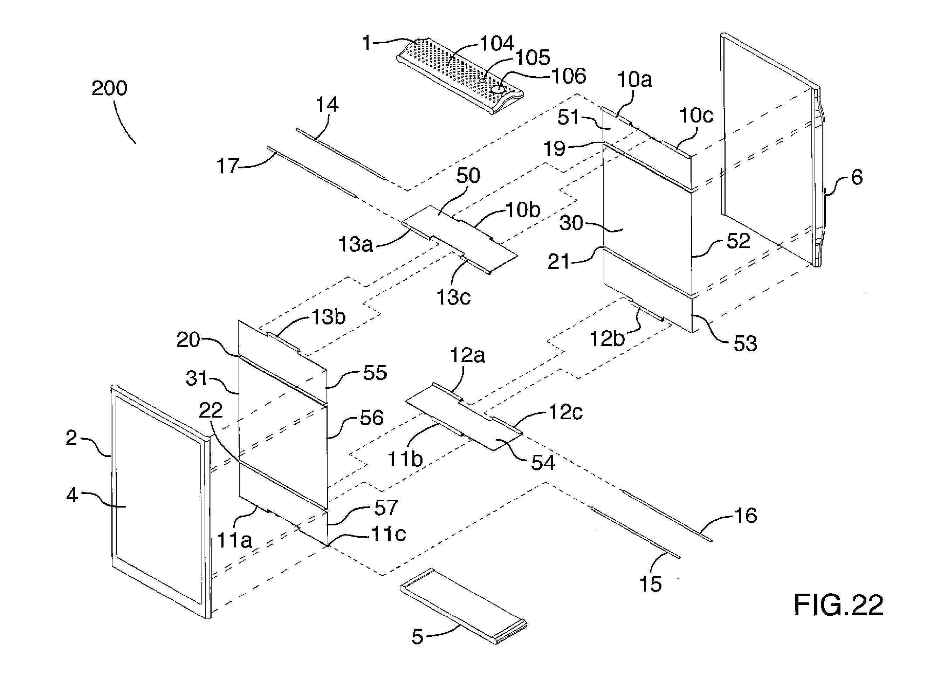

Figure 22 illustrates an exploded view of the mobile electronic device 200.

In this view, each of the first auxiliary section 1, the main screen section 2, the second auxiliary section 5, and the back section 6 are shown.

Also illustrated are each of the hinges 10a-c, 11a-c, 12a-c, and 13a-c and pins 14-17. This view also illustrates that the hinges 10a-c, 11a-c, and 12a-c may, in one embodiment, be composed of different pieces 50, 51, 53, 54, 55 and 57. The pieces 50, 51, 53, 54, 55 and 57 may be made of metal or plastic or some other suitable material.

As is illustrated in Figure 22, the hinges 10a-10c can be composed of hinges attached or included (i.e., integral with) in different pieces. Hinges 10a and 10c are connected to or included in piece 51. Hinge 10b is connected to or included in piece 50. When pin 14 is inserted into hinges 10a-10c, pieces 50 and 51 are connected.

Hinges 11a-11c can also be composed of hinges attached or included in different pieces. Hinges 11a and 11c are connected to or included in piece 57. Hinge 11b is connected to or included in piece 54. When pin 15 is inserted into hinges 11a-11c, pieces 57 and 54 are connected.

Hinges 12a-12c can be composed of hinges attached or included in different pieces. Hinges 12a and 12c are connected to or included in piece 54. Hinge 12b is connected to or included in piece 53. When pin 16 is inserted into hinges 12a-12c, pieces 54 and 53 are connected.

Hinges 13a-13c can be composed of hinges attached or included in different pieces. Hinges 13a and 13c are connected to or included in piece 50. Hinge 13b is connected to or included in piece 55. When pin 17 is inserted into hinges 13a-13c, pieces 55 and 50 are connected.

Thus, as is illustrated in Figure 22, pieces 50 and 54 include hinges from different hinge sets.

Pieces 55, 56, and 57 are attached to the main screen section 2. Piece 54 is attached to second auxiliary section 5. Pieces 51, 52, and 53 are attached to back section 6. Piece 50 is attached to first auxiliary section 1. As previously discussed with respect to device 100, although other manners of attachment are possible, the pieces 50-57 can be connected to their respective sections 1, 2, 5, 6 by means of adhesives, welding, tab/groove connections, and the like.

Also illustrated in Figure 22 are recesses 19, 20, 21, and 22. Recesses 19 and 21 are illustrated as spaces between pieces 51 and 52 and pieces 52 and 53, respectively. Recesses 20 and 22 are illustrated as spaces between pieces 55 and 56 and pieces 56 and 57, respectively.

In an alternative embodiment, the recesses 19 and 21 and recesses 20 and 22 could respectively be defined in an integral piece of material, rather than being defined as spaces/gaps between the pieces. In this alternative embodiment, pieces 55-57 and 51-53 are each integral pieces (not shown) having recesses defined therein.

In addition, in one embodiment, pieces 52 and 56 may include the clasping mechanism 30/31 which retain the main screen section 2 and back section 6 to each other.

The electrical connections between the first auxiliary section 1, the main screen section 2, the second auxiliary section 5, and the back section 6 are implemented with flexible wiring which, in one embodiment, passes over the hinge elements 10b, 11b, 12b, and 13b. The wiring can be protected by a cover layer which is also included on elements 10a-13a and elements 10c-13c.

### Third Embodiment

The third embodiment will now be described with reference to the above-described first and second embodiments. The reference numerals that are the same as those in the first and second embodiments will remain consistent with the first and second embodiments unless there is a special necessity. In the third embodiment, the first auxiliary section 1 of a mobile electronic device 300 includes a speaker 110. Alternatively, the speaker 110 can also include a speaker/receiver.

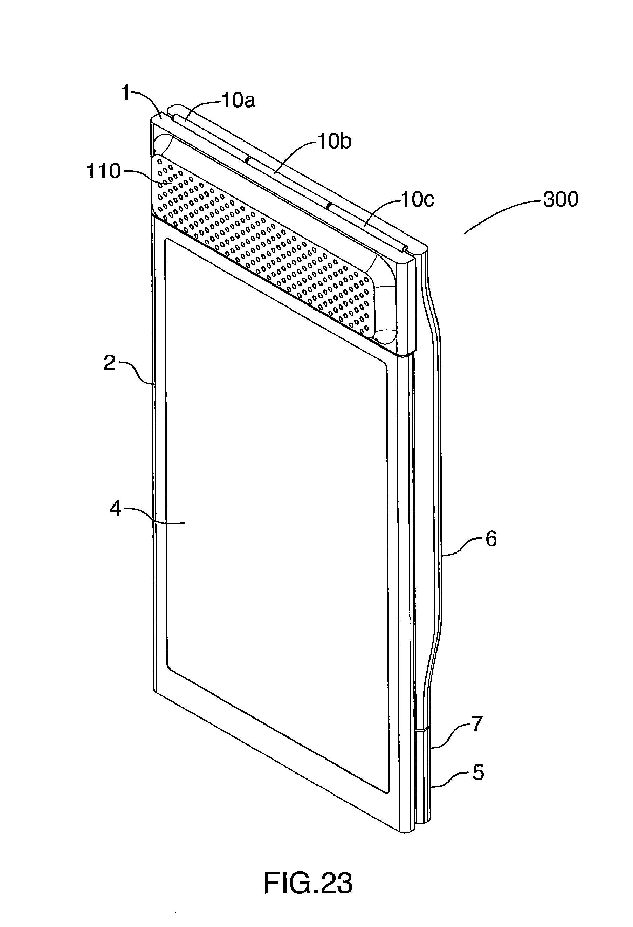

Figure 23 illustrates the mobile electronic device 300 having four sections, the first auxiliary section 1, the main screen section 2, the second auxiliary section 5, and the back section 6.

The first auxiliary section 1 includes the speaker 110. The speaker 110 functions to output or input or output and input audio to and from the device.

The first auxiliary section 1 is connected at one end to the main screen section 2 and at an opposite end to the back section 6. Figure 23 illustrates, for example, hinges 10a-10c and the pin that connect the first auxiliary section 1 to the back section 6. The hinges may be rigid or flexible and may be made of metal, plastic, rubber, or other suitable material, for example. The first auxiliary section 1 may also be connected to the main screen section 2 and the back section 6 by way of other suitable connecting mechanisms. For instance, the first auxiliary section 1 may be connected to the main screen section 2 and the back section 6 by way of flexible material, such as rubber, which bends as the sections move. In one embodiment, the flexible material may be formed with a bend that flattens as the sections move.

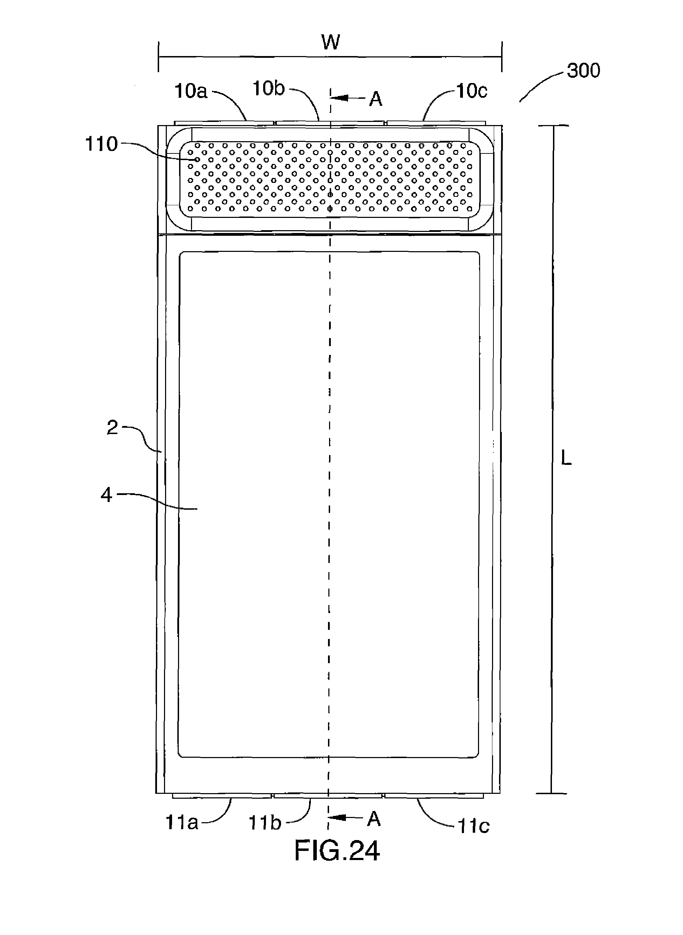

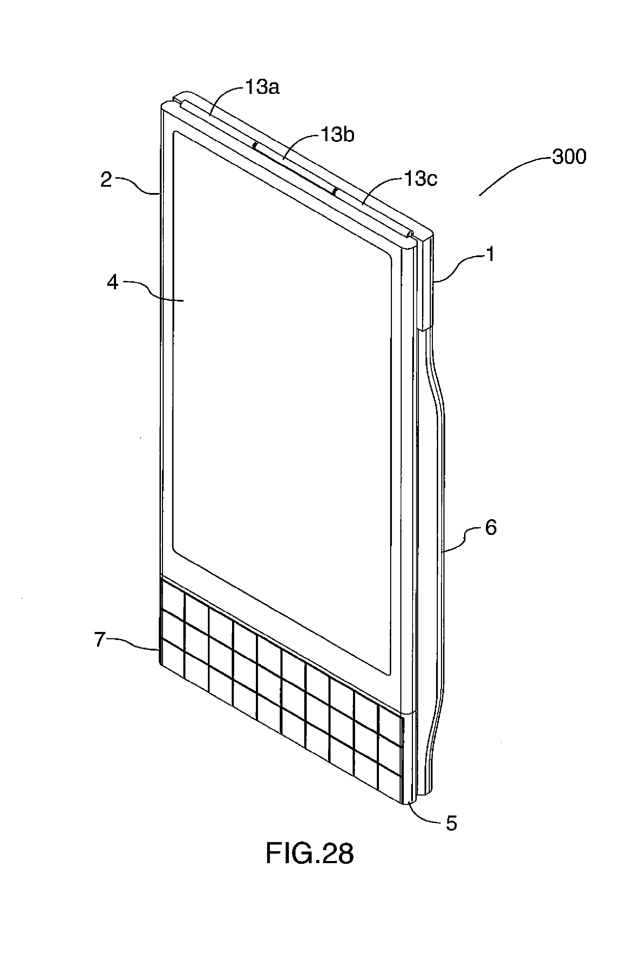

The second auxiliary section 5 includes the keyboard 7 (Figure 28). The keyboard 7, in one embodiment, may be a tactile keyboard. The second auxiliary section 5 could also include an additional display screen or touch screen that may or may not function as the keyboard. In addition, the second auxiliary section 5 could include, in place of or in addition to the keyboard or display screen, a touchless input device implemented via image sensors or other light or movement sensors. The second auxiliary section 5 is connected at one end to the main screen section 2 and at an opposite end to the back section 6 by way of, for example, a hinge similar to hinges 10a-10c and the pin (Figure 24). The second auxiliary section 5 may also be connected to the main screen section 2 and the back section 6 by way of other suitable connecting mechanisms such as the mechanisms described above with respect to the first auxiliary section 1.

The back section 6, in one embodiment, includes the battery in addition to circuits associated with operation of the mobile electronic device 300, such as a microprocessor and memory. The microprocessor is used to implement functions executed on the mobile electronic device 300 and to implement the display and execution of the operating system of the mobile electronic device 300 on the display screen 4. The memory is used to store programs and functions that are executed by the microprocessor.

The back section 6 may be of differing thickness, such that one or more portions of the back section 6 is a first thickness and one or more portions of the back section 6 is a second thickness, wherein the first thickness is greater than the second thickness. As previously discussed with respect to devices 100 and 200, such variations in thickness may render the device 300 more comfortable during use, when the device is gripped by a user's hand(s). Further, such variations in thickness may provide a gripping surface for manipulating the device between the open and closed positions.

In one embodiment, the main screen section 2 includes the display screen 4. The display screen 4 may be a touch screen or other suitable device that displays information and receives input from a user.

Figure 24 illustrates a front facing view of the mobile electronic device 300. From the front facing view only the first auxiliary section 1 and the main screen section 2 are shown. The first auxiliary section 1 includes the speaker/receiver 104, the opening 105, and the camera 106.

Also illustrated in Figure 24 are the hinges 10a-10c that connect the first auxiliary section 1 to the back section 6. Also illustrated in Figure 13 are the hinges 11a-11c that connect the main screen section 2 to the back section 6.

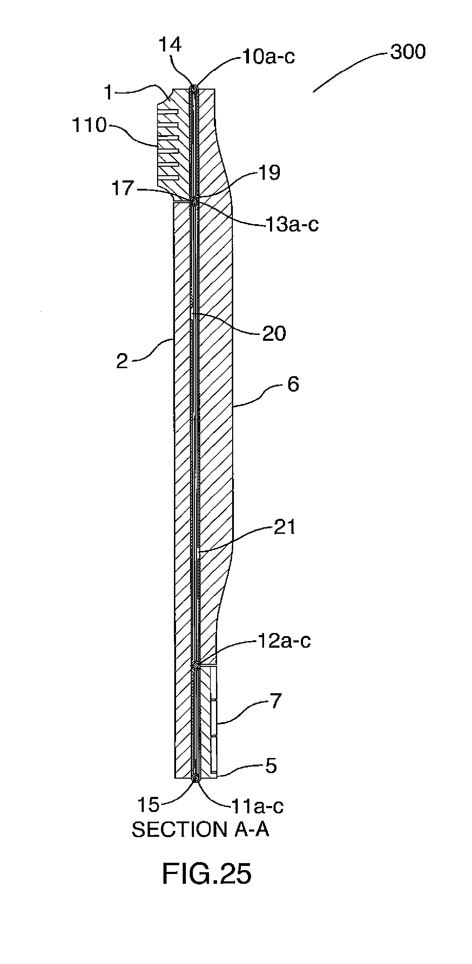

Figure 25 illustrates a sectional view along line A-A shown in Figure 24. In Figure 25, each of the first auxiliary section 1, the main screen section 2, the second auxiliary section 5, and the back section 6 are shown. Also shown are hinges 10a-c connecting the first auxiliary section 1 to the back section 6 and pin 14, which is disposed there-through. Hinges 13a-c with pin 17 there-through connect the first auxiliary section 1 to the main screen section 2. Hinges 12a-c and pin 16 there-through connect the back section 6 to the second auxiliary section 5 having the keyboard 7 thereon. Hinges 11a-c and pin 15 there-through connect the second auxiliary section 5 to the main screen section 2.

To provide space for hinges 10a-c a recess 20 is defined in a back side of the main screen section 2 (on the side that is opposite of the display screen 4). To provide space for hinges 11a-c, a recess 21 is defined in a back side of the back section 6 (on the side that is closest to the display screen 4).

In the state shown in Figure 25, hinges 12a-c are resting in recess 22. The recess 22 provides space for hinges 12a-c and is defined in the back side of main screen section 2. Hinges 13a-c are resting in recess 19, which provides space for hinges 13a-c and is defined in the back side of back section 6.

The recesses 19-22 enable a front face or first side of the device 300, including the main screen section 2 and either the first auxiliary section 1 or the second auxiliary section 5, to be positioned flat against a back face or second side of the device 300, including the back section 6 and either the first auxiliary section 1 or the second auxiliary section 5.

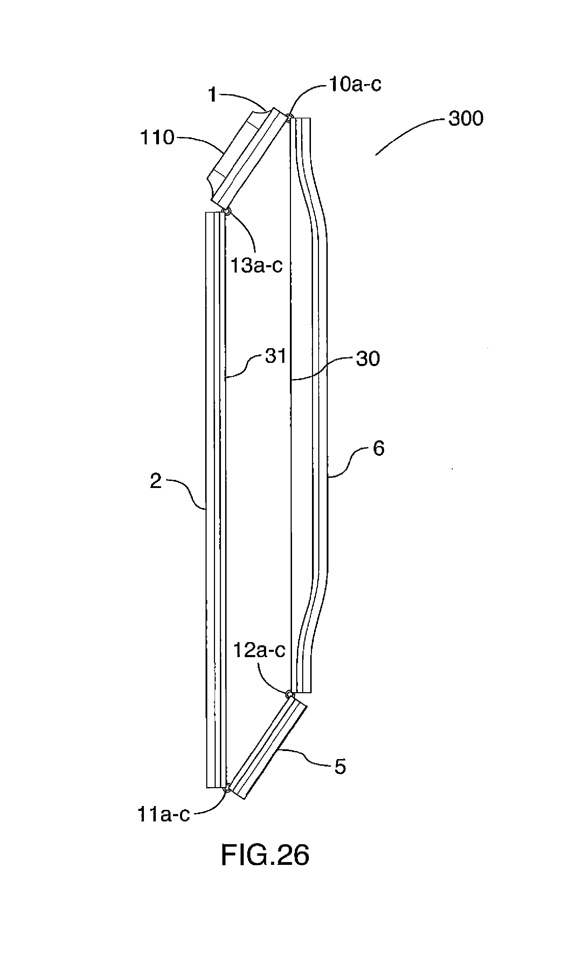

Figure 26 illustrates a view of the mobile electronic device 300 in an open position as the device 300 transitions to the second state. In the open position, the mobile electronic device 300 is in the process of switching from a first state to a second state. This switching is an example of the flipping mechanism. The first state is a state in which the first auxiliary section 1 and the main screen section 2 are on the first side of the device 300, and the back section 6 and the second auxiliary section 5 are on the second side of the device 300. The first and second sides are on opposite sides of the mobile electronic device 300. The second state is a state in which the second auxiliary section 5 and the main screen section 2 are on the first side of the device 300, and the back section 6 and the first auxiliary section 1 are on the second side of the device 300.

In the closed position, the device 300 has the same size footprint (length and width shown in Figure 24) in the first state and in the second state. As previously described, maintaining the same footprint in both the open and closed positions enables the device size to remain the same while providing large display/input areas, and prevents the device 300 from becoming too unwieldy.

When the second auxiliary section 5 is on the second side, the keyboard or input device 7, respectively, may be disabled. Alternatively, the keyboard 7 may be fully or partially enabled for input. When the keyboard 7 is on the second side, a touch screen keyboard may be displayed on the display screen 4.

When the second auxiliary section 1 is on the second side, the speaker 110 is still enabled for input/output of audio to/from the device 300.

To keep the first side of the device 300 attached to the second side of the device 300 when in the closed position, there is utilized a clasping mechanism 30/31. The clasping mechanism can be implemented using a magnet 30 or 31 and a metal plate 30 or 31. Alternatively, the clasping mechanism can be implemented using two magnets 30 and 31. The mechanism can also be implemented with three magnets, with two of the magnets being positioned on either the main screen section 2 or the back section 6. Alternatively, the clasping mechanism 30/31 can be implemented with two metal sections and one magnet or two magnets and one metal section, where the two metal sections or two magnets are positioned on either the main screen section 2 or the back section 6.

The clasping mechanism 30/31 can also be implemented with a mechanical clasp having a hook or clasp made of metal or plastic. The clasping mechanism 30/31 can also be implemented with a pin or a pin having a ball on the end.

The clasping mechanism 30/31 can be released by force of the user or by a mechanical release. For example, when the device 300 is in the closed position, the user is able release the clasping mechanism 30/31 by pulling the main screen section 2 apart from the back section 6. Alternatively, when the device 300 is in the closed position, the user is able release the clasping mechanism 30/31 by activating a mechanical release, such as a button, which will disengage the clasping mechanism 30/31. Once the clasping mechanism 30/31 is disengaged, the device 300 is in the open position. The user may return the device 300 to the closed position by bringing the main screen section 2 and the back section 6 together. The process of returning the device 300 to the closed position also allows the user to select between the first and second states of the device 300.

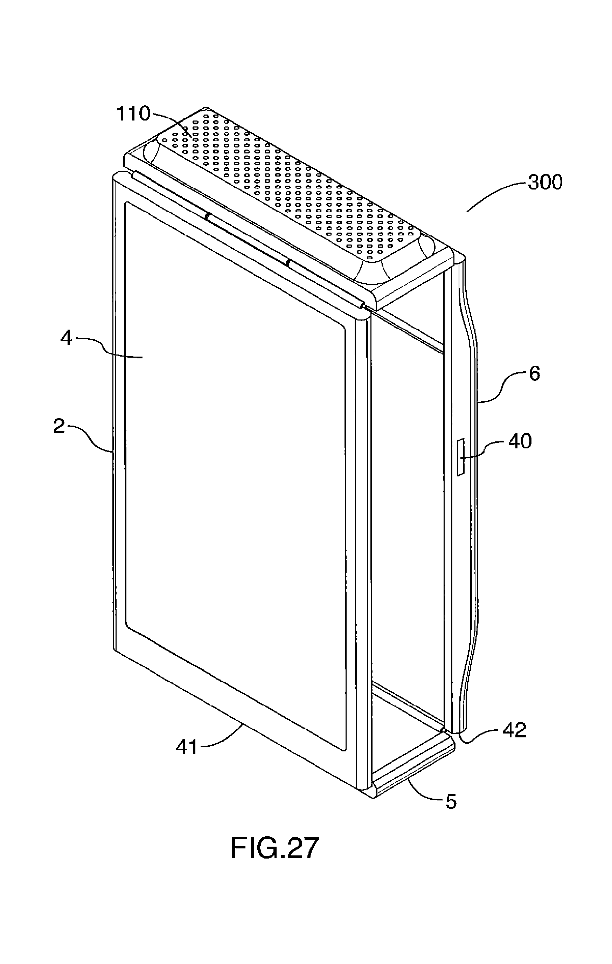

Figure 27 illustrates another view of the mobile electronic device 300 in the open position as the device 300 continues to transition to the second state.

In the open position, the mobile electronic device 300 may rest on its side to maintain an upright position for viewing purposes. In the open position, the keyboard 7 may be disabled or may be enabled.

The power or input connectors for the mobile electronic device 300 may be on a side 40 of the device, on a bottom 41 of the main screen section 2 or a bottom 42 of the back section 6.

Figure 28 illustrates another view of the mobile electronic device 300. In this view, the display screen 4 and the keyboard 7 are presented to the user. In this view, the main screen section 2 and the second auxiliary section 5 are on the first side corresponding to the second state in the closed position.

In this second state, the hinges 13a-13c connecting the main screen section 2 to the first auxiliary section 1 are shown. Also shown is the keyboard 7 of the second auxiliary section 5 and the back section 6.

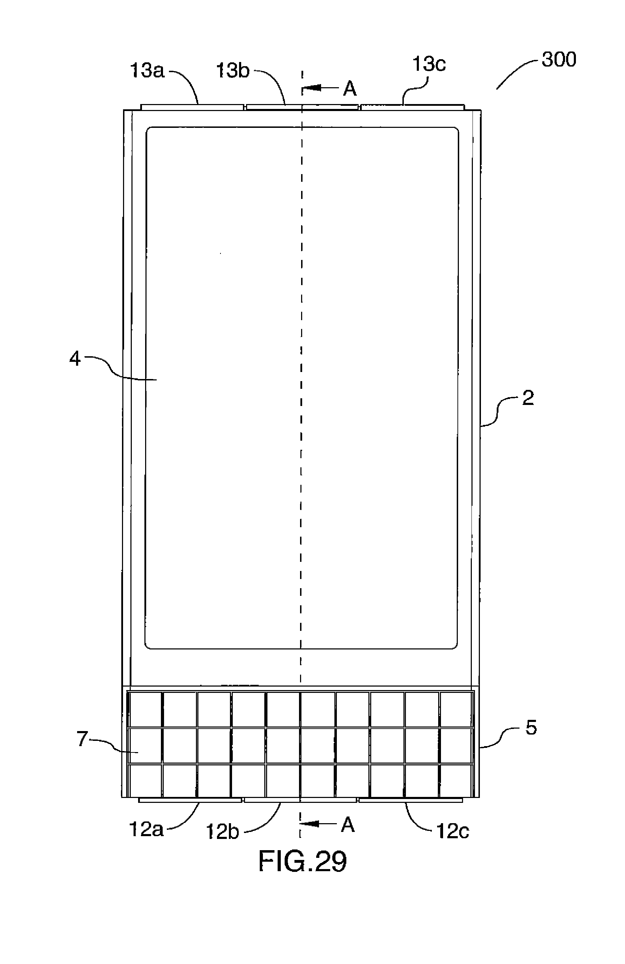

Figure 29 illustrates a front view of the mobile electronic device 300 in the second state and in the closed position. In this view, there is illustrated the hinges 13a-13c, the main screen section 2 having therein the display screen 4, and the second auxiliary section 5 having therein the keyboard 7. Also illustrated in Figure 29 are the hinges 12a-12c, which connect the second auxiliary section 5 to the back section 6.

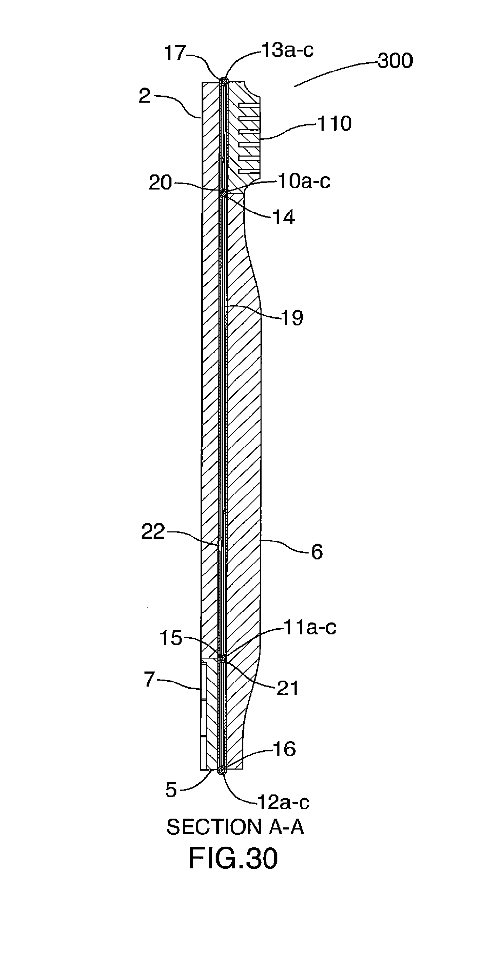

Figure 30 illustrates a sectional view along line A-A found in Figure 29. In Figure 30, each of the first auxiliary section 1, the main screen section 2, the second auxiliary section 5, and the back section 6 are shown. Also shown are hinges 13a-c with pin 17 there-through connecting the first auxiliary section 1 to the main screen section 2. Hinges 10a-c and pin 14, which is disposed there-through, connect the first auxiliary section 1 to the back section 6. Hinges 12a-c and pin 16 there-through connect the back section 6 to the second auxiliary section 5 having the keyboard 7 thereon. Hinges 11a-c and pin 15 there-through connect the second auxiliary section 5 to the main screen section 2.

Also shown in Figure 30 are recesses 19, 20, 21, and 22, which provide space for hinges 10a-13c. In the view shown in Figure 19, recesses 20 and 21 are occupied by hinges 10a-c and 11a-c, respectively.

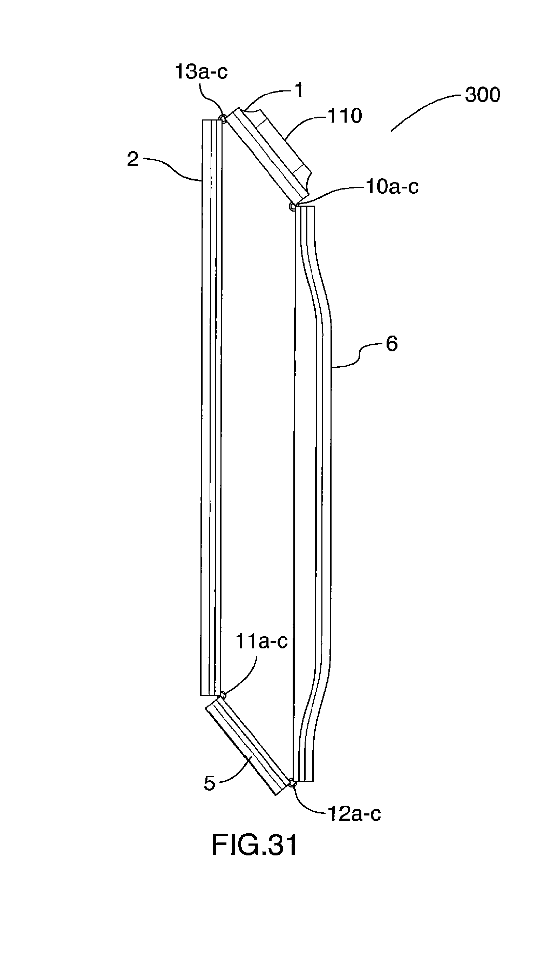

Figure 31 illustrates a side view of the mobile electronic device 300 in the open position as the device 300 transitions to the closed position and back to the first state of the device 100. In this view, each of the first auxiliary section 1, the main screen section 2, the second auxiliary section 5, and the back section 6 are shown. Also illustrated are the hinges 10a-c, 11a-c, 12a-c, and 13a-c.

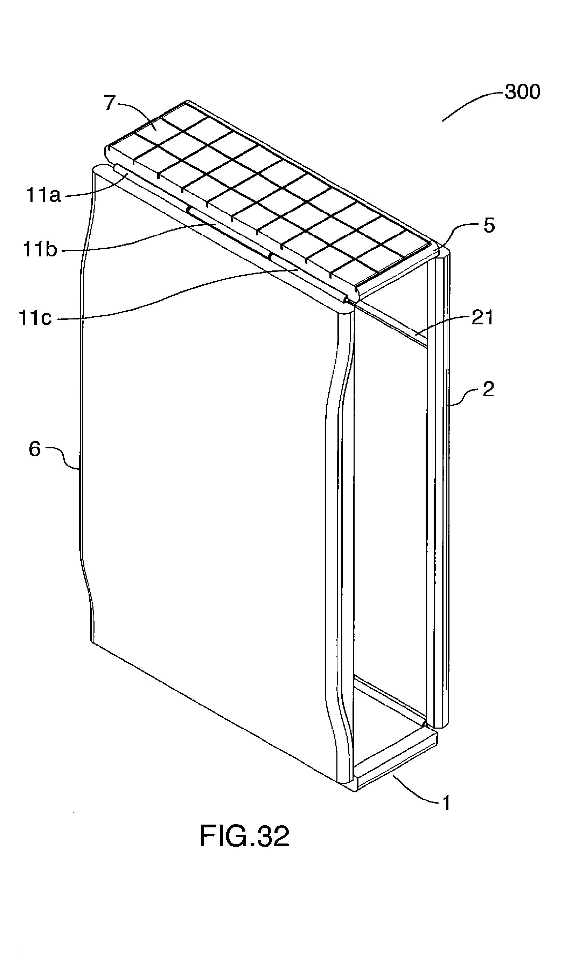

Figure 32 illustrates another view of the mobile electronic device 300 in the open position as the device 300 continues to transition back to the first state. In this view, each of the first auxiliary section 1, the main screen section 2, the second auxiliary section 5, and the back section 6 are shown. Also shown is the keyboard 7 on the second auxiliary section 5 and the recess 21, which provides a space for hinges 11a-11c.

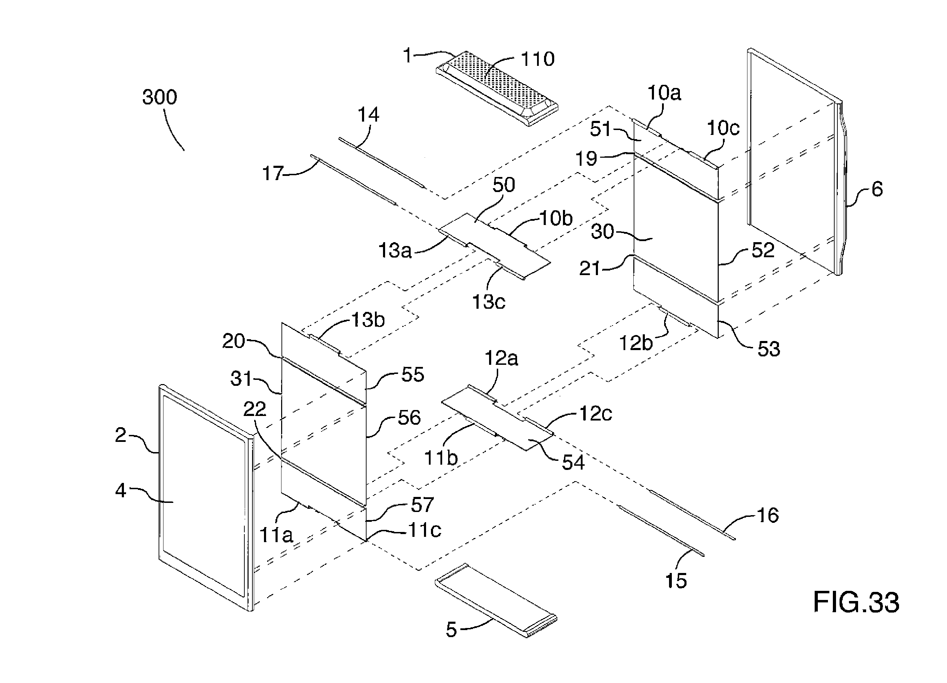

Figure 33 illustrates an exploded view of the mobile electronic device 300.

In this view, each of the first auxiliary section 1, the main screen section 2, the second auxiliary section 5, and the back section 6 are shown.

Also illustrated are each of the hinges 10a-c, 11a-c, 12a-c, and 13a-c, and pins 14-17. This view also illustrates that the hinges 10a-c, 11a-c and 12a-c may, in one embodiment, be composed of different pieces 50, 51, 53, 54, 55, and 57. The pieces 50, 51, 53, 54, 55, and 57 may be made of metal or plastic or some other suitable material.

As is illustrated in Figure 33, the hinges 10a-c can be composed of hinges attached or included in different pieces. Hinges 10a and 10c are connected to or included (i.e., integrally formed in) in piece 51. Hinge 10b is connected to or included in piece 50. When pin 14 is inserted into hinges 10a-10c, pieces 50 and 51 are connected.

Hinges 11a-11c can also be composed of hinges attached or included in different pieces. Hinges 11a and 11c are connected to or included in piece 57. Hinge 11b is connected to or included in piece 54. When pin 15 is inserted into hinges 11a-11c, pieces 57 and 54 are connected.

Hinges 12a-12c can be composed of hinges attached or included in different pieces. Hinges 12a and 12c are connected to or included in piece 54. Hinge 12b is connected to or included in piece 53. When pin 16 is inserted into hinges 12a-12c, pieces 54 and 53 are connected.

Hinges 13a-13c can be composed of hinges attached or included in different pieces. Hinges 13a and 13c are connected to or included in piece 50. Hinge 13b is connected to or included in piece 55. When pin 17 is inserted into hinges 13a-13c, pieces 55 and 50 are connected.

Thus, as is illustrated in Figure 33, pieces 50 and 54 include hinges from different hinge sets.

Pieces 55, 56, and 57 are attached to the main screen section 2. Piece 54 is attached to second auxiliary section 5. Pieces 51, 52, and 53 are attached to back section 6. Piece 50 is attached to first auxiliary section 1. Although other manners of attachment are possible, the pieces 50-57 can be connected to their respective sections 1, 2, 5, 6 by means of adhesives, welding, tab/groove connections, and the like.

Also illustrated in Figure 33 are recesses 19, 20, 21, and 22. Recesses 19 and 21 are illustrated as spaces between pieces 51 and 52 and pieces 52 and 53, respectively. Recesses 20 and 22 are illustrated as spaces between pieces 55 and 56 and pieces 56 and 57, respectively.

In an alternative embodiment, the recesses 19 and 21 and recesses 20 and 22 could respectively be defined in an integral piece of material, rather than being defined as spaces/gaps between the pieces. In this alternative embodiment, pieces 55-57 and 51-53 are each integral pieces (not shown) having recesses defined therein.

In addition, in one embodiment, pieces 52 and 56 may include the clasping mechanism 30/31 which retain the main screen section 2 and back section 6 to each other.

The electrical connections between the first auxiliary section 1, the main screen section 2, the second auxiliary section 5, and the back section 6 are implemented with flexible wiring which, in one embodiment, passes over the hinge elements 10b, 11b, 12b, and 13b. The wiring can be protected by a cover layer which is also included on elements 10a-13a and elements 10c-13c.

As explained above, the described embodiments have numerous advantages. For example, as a result of the above described configuration it is possible to maintain the same footprint in both the open and closed positions which enables the device size to remain the same while providing large display/input areas, and prevents the device from becoming too unwieldy. In addition, the device is balanced when the keyboard is on the front face such that the device does not feel top-heavy to the user during typing on the keyboard.

In addition, the device has the advantage of being modular such that, depending on the user's need, the device can include different modules (such as a keyboard, an additional display element, a camera or a input/output device) on the front face of the device.

While certain embodiments have been described, these embodiments have been presented by way of example only, and are not intended to limit the scope of the disclosure. Indeed the novel methods and systems described herein may be embodied in a variety of other forms; furthermore, various omissions, substitutions, and changes in the form of the methods and systems described herein may be made without departing from the spirit of the disclosure. The accompanying claims and their equivalents are intended to cover such forms or modifications as would fall within the scope and spirit of the disclosure.

## Claims

1. A mobile electronic device, comprising:
a first auxiliary section;
a main screen section including a display screen;
a second auxiliary section including a user input device; and
a back section including a microprocessor and a battery,
wherein, in a first state, the mobile electronic device includes the first auxiliary section and the main screen section on a first side of the device, and the second auxiliary section and the back section on a second side of the device, the first side and the second side being disposed on opposite sides of the mobile electronic device; and
in a second state, the mobile electronic device includes the second auxiliary section and the main screen section on the first side, and the first auxiliary section and the back section on the second side.

2. The mobile electronic device of claim 1, wherein the first auxiliary section includes an audio input/output device.

3. The mobile electronic device of claim 1, wherein the first auxiliary section includes a second display screen and the display screen is larger than the second display screen.

4. The mobile electronic device of claim 1, wherein the first auxiliary section includes at least one of an audio input/output device, a camera and a light emitting diode.

5. The mobile electronic device according to claim 1, wherein the mobile electronic device is moveable from the first state to the second state.

6. The mobile electronic device according to claim 1,
wherein the first auxiliary section is connected at one end thereof to the main screen section by a first hinging mechanism, and is connected at an opposite end thereof to the back section by a second hinging mechanism;
the main screen section is connected at one end thereof to the second auxiliary section by a third hinging mechanism; and
the back section is connected at an opposite end thereof to the second auxiliary section by a fourth hinging mechanism.

7. The mobile electronic device according to claim 5, wherein during a switching operation from the first state to the second state, the mobile electronic device is in an open configuration in which the main screen section is not in contact with the back section.

8. The mobile electronic device according to claim 1,
wherein the main screen section is joined to the back section by a clasping mechanism.

9. The mobile electronic device according to claim 1,
wherein the main screen section is electrically connected to the back section via the first or second auxiliary sections.

10. The mobile electronic device according to claim 1,
wherein the user input device is a tactile keyboard.

11. The mobile electronic device according to claim 3, wherein the display screen is configured to display content independently from a display of content on the second display screen.

12. The mobile electronic device according to claim 1, wherein the main screen section includes first and second recesses on a back side thereof, and the back section includes third and fourth recesses on a back side thereof, the back side of the main screen section being adjacent to the back side of the back section when the device is in a closed configuration.

13. The mobile electronic device according to claim 12, wherein, in the closed configuration and in the first state, the first hinging mechanism rests in the third recess and the fourth hinging mechanism rests in the second recess.

14. The mobile electronic device according to claim 12, wherein, in the closed configuration and in the second state, the second hinging mechanism rests in the first recess and the third hinging mechanism rests in the fourth recess.

15. The mobile electronic device according to claim 9,
wherein the keyboard is disabled when the mobile electronic device is in the first state.

16. The mobile electronic device according to claim 1, wherein the mobile electronic device has a same length and width in the first state as in the second state.

17. The mobile electronic device according to claim 1, wherein the back section has a first thickness and a second thickness that are different from each other.

18. The mobile electronic device according to claim 3, wherein the first hinging mechanism comprises a portion from a first plate attached to the first auxiliary section, a portion from a second plate attached to the main screen section, and a first pin; and
the second hinging mechanism comprises a portion from the first plate and a third plate attached to the back section, and a second pin.

19. The mobile electronic device according to claim 18, wherein the third hinging mechanism comprises a portion from a fourth plate attached to the back section, a portion from a fifth plate attached to the second auxiliary section, and a third pin.

20. The mobile electronic device according to claim 18, wherein the fourth hinging mechanism comprises a portion from a sixth plate attached to the main screen section, a portion from the fifth plate attached to the second auxiliary section, and a fourth pin.
